# EUROPEAN PATENT APPLICATION

(11) **EP 3 591 307 A1**
(43) Date of publication of application: **08.01.2020**
(21) Application number: 18761654.5
(22) Date of filing: 22.02.2018
(51) Int. Cl.: F24F 13/22, F24F 1/00, F24F 11/30, F24F 11/62, F24F 11/70, F24F 11/86

(54) **AIR CONDITIONER**

(30) Priority: 28.02.2017 JP 2017036408; 26.09.2017 JP 2017184924
(71) Applicant: Fujitsu General Limited, Kanagawa 213-8502 (JP)
(72) Inventor: OKUNO Hiroki, Kawasaki-shi Kanagawa 213-8502 (JP); SAIGAWA Junnosuke, Kawasaki-shi Kanagawa 213-8502 (JP)
(74) Representative: Cabinet Beau de Loménie
(86) International application number: PCT/JP2018/006445
(87) International publication number: WO 2018/159444

(57) **Abstract**

When an indoor heat exchange heating operation is performed by an air conditioner (1), control means drives and controls an indoor fan (32) such that an indoor heat exchange temperature (Tc) which is a temperature of an indoor heat exchanger (31) is maintained between at 55°C and at 57°C for 10 minutes by referring to an indoor fan control table (400). In a case where the indoor heat exchange temperature (Tc) is lower than 55°C, an indoor fan rotation speed (Rfi) is set to a rotation speed lower than a current indoor fan rotation speed (Rfi) by a predetermined rotation speed. In a case where the indoor heat exchange temperature (Tc) is 57°C or higher, the indoor fan rotation speed (Rfi) is not changed from the current indoor fan rotation speed (Rfi), or is set to a rotation speed higher than the indoor fan rotation speed (Rfi) by a predetermined rotation speed. Accordingly, the number of fungi and bacteria can be reduced by heating the indoor heat exchanger, and an air conditioner that suppresses the growth of fungi and bacteria can be provided.

## Description

### Technical Field

The present invention relates to an air conditioner that suppresses a growth of fungus and bacteria in an indoor unit.

### Background Art

When the air conditioner performs a cooling operation, condensed water is generated in an indoor heat exchanger that functions as an evaporator. The condensed water causes the growth of fungus and bacteria in the indoor heat exchanger, and when the fungus and the bacteria grow, the conditioned air blown from the indoor unit has an unpleasant odor. The air conditioner which dries the inside of the indoor unit including the indoor heat exchanger after the cooling operation is proposed (for example, refer to PTL 1 and PTL 2).

### Citation List

### Patent Literature

PTL 1: JP-A-10-62000
PTL 2: JP-A-2016-65687

### Summary of Invention

### Technical Problem

In the air conditioner described in PTL 1 and PTL 2, the indoor heat exchanger is heated to dry the inside of the indoor unit after the cooling operation. However, in the above-mentioned heating for drying, a temperature of the indoor heat exchanger is not much different from a temperature in a heating operation, and does not lead to a decrease in the number of fungus and bacteria. Generally, in the operation of drying the inside of the indoor unit as described above, the temperature of the indoor heat exchanger is set to about 40°C, only the growth of fungus and bacteria is suppressed at the temperature. However, when the cooling operation is performed again, there is a possibility that fungi and bacteria of which growth is suppressed may be grown again.

The present invention solves the above-described problems, and provides an air conditioner that reduces the number of fungi and bacteria by heating the indoor heat exchanger to suppress the growth of fungi and bacteria.

### Solution to Problem

In order to solve the above described problems, an air conditioner of the present invention includes an indoor unit including an indoor heat exchanger, an indoor fan and an indoor heat exchange temperature sensor detecting the indoor heat exchange temperature which is a temperature of the indoor heat exchanger, and control means for controlling the indoor fan. The control means causes the indoor heat exchanger to function as a condenser and performs an indoor heat exchange heating operation for controlling the indoor fan such that the indoor heat exchange temperature is maintained to a predetermined first temperature or higher at which the number of fungi and bacteria existing in the indoor heat exchanger is reduced.

### Advantageous Effects of Invention

According to the air conditioner of the present invention configured as described above, the number of fungi and bacteria can be reduced by heating the indoor heat exchanger, and the growth of fungus and bacteria can be suppressed.

### Brief Description of Drawings

FIG. 1 is a view illustrating an air conditioner according to an embodiment of the present invention, (A) is an external perspective view of an indoor unit and an outdoor unit, and (B) is a sectional view taken along line X-X in (A).
FIG. 2 is a diagram illustrating an air conditioner according to an embodiment of the present invention, (A) is a refrigerant circuit diagram, and (B) is a block diagram of outdoor unit control means and indoor unit control means.
FIG. 3 is a flowchart showing a flow of a process of a heating operation control.
FIG. 4 is a flowchart showing a flow of a process of a protection control in a heating operation.
FIG. 5 is data showing a survival rate of fungus or bacteria for each indoor heat exchange temperature, (A) is for fungus, and (B) is for Escherichia coli.
FIG. 6 is a control table of each fan in an indoor heat exchange heating operation, (A) is an indoor fan control table, and (B) is an outdoor fan control table.
FIG. 7 is a flowchart showing a flow of a process of a main routine of an indoor heat exchange heating operation.
FIG. 8 is a subroutine of an indoor heat exchange heating operation, and is a flowchart showing a flow of a process of an operation control before heating.
FIG. 9 is a subroutine of an indoor heat exchange heating operation, and is a flowchart showing a flow of a process of an indoor fan control when maintaining a temperature.
FIG. 10 is a subroutine of an indoor heat exchange heating operation, and is a flowchart showing a flow of a process of an outdoor fan control when maintaining a temperature.
FIG. 11 is a flowchart showing a flow of a process of a protection control in an indoor heat exchange heating operation.
FIG. 12 is a flowchart showing a flow of a process of a wet control operation.

### Reference Signs List

1: air conditioner, 2: outdoor unit, 3: indoor unit, 10: refrigerant circuit, 21: compressor, 27: outdoor fan, 32: indoor fan, 35: vertical wind direction plate, 71: discharge temperature sensor, 72: outdoor heat exchange temperature sensor, 73: outside air temperature sensor, 74: indoor heat exchange temperature sensor, 75: indoor temperature sensor, 200: outdoor unit control means, 210: outdoor unit CPU, 300: indoor unit control means, 310: indoor unit CPU, 400: indoor fan control table, 500: outdoor fan control table, Tc: indoor heat exchange temperature, Tch1: first threshold indoor heat exchange temperature, Tch2: second threshold indoor heat exchange temperature, Tc1 to Tc5: first to fifth threshold indoor heat exchange temperature, ΔTc: indoor heat exchange temperature change, Te: outdoor heat exchange temperature, Teh: threshold outdoor heat exchange temperature, Td: discharge temperature, Tdh1: first threshold discharge temperature, Tdh2: second threshold discharge temperature, Ti: indoor temperature, Tip: threshold indoor temperature, To: outside air temperature, Top1: first threshold outside air temperature, Top2: second threshold outside air temperature, Top3: third threshold outside air temperature, Tp: set temperature, ΔT: temperature difference, Tch1: first vertical indoor heat exchange temperature, Tch2: second vertical indoor heat exchange temperature, tp1: first predetermined time, tp2: second predetermined time, tp3: third predetermined time, tc: compressor release interval time, tfi: indoor fan release interval time, Rc: compressor rotation speed, Rcr: compressor release rotation speed, Rcm: compressor minimum rotation speed, Rfi: indoor fan rotation speed. Rfia: indoor fan rotation speed before heating, Rfir: indoor fan release rotation speed, Rfim: indoor fan minimum rotation speed, Rfip: indoor fan initial rotation speed, Rfo: outdoor fan rotation speed, Rfoa: outdoor fan rotation speed before heating, Rfob: outdoor fan rotation speed when maintaining, D: expansion valve opening degree, Dp: predetermined expansion valve opening degree

### Description of Embodiments

Hereinafter, embodiments of the present invention will be described in detail based on the attached drawings. As an embodiment, an air conditioner in which an outdoor unit and an indoor unit are connected by two refrigerant pipings will be described as an example. The present invention is not limited to the following embodiments, and various modifications can be made without departing from the spirit of the present invention.

### [Example]

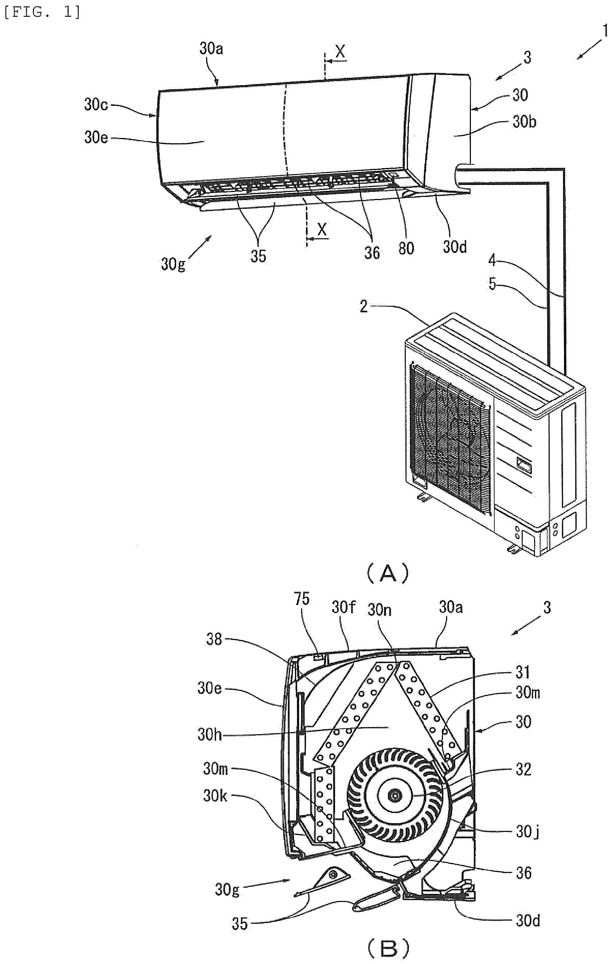

As shown in FIG. 1(A), an air conditioner 1 in the present embodiment includes an outdoor unit 2 which is installed outdoors and an indoor unit 3 which is installed indoors and connected to the outdoor unit 2 by a liquid pipe 4 and a gas pipe 5.

### <Shape of Indoor unit and Arrangement of Device>

The indoor unit 3 has an indoor unit housing 30 which is horizontally long and substantially rectangular. The indoor unit housing 30 is formed of a top panel 30a, a right side panel 30b, a left side panel 30c, a bottom panel 30d, and a front panel 30e. All of the panels are formed using a resin material.

The top panel 30a is formed in a substantially rectangular shape to form the top surface of the indoor unit housing 30. As shown to FIG. 1(B), a suction port 30f which takes indoor air to the inside of the indoor unit 3 is provided in the top panel 30a. Although it is not shown in the drawing, the suction port 30f is formed in a lattice shape.

The right side panel 30b and the left side panel 30c form left and right sides of the indoor unit housing 30. The right side panel 30b and the left side panel 30c are formed in a curved surface having a predetermined curvature, and have a left-right symmetric shape.

The bottom panel 30d is formed in a substantially rectangular shape to form the bottom surface of the indoor unit housing 30. As shown in FIG. 1(B), a base 30j, which will be described later, is fixed to the bottom panel 30d.

The front panel 30e is formed in a substantially rectangular shape and is disposed to cover the front face of the indoor unit housing 30. The front panel 30e forms a design surface of the indoor unit 3.

As described above, the top panel 30a is provided with the suction port 30f, and a blowing port 30g for blowing the indoor air heat-exchanged with a refrigerant in the indoor heat exchanger 31 which will be described later indoors is provided below the front panel 30e. An indoor fan 32 for sucking the indoor air from the suction port 30f and blowing the indoor air from the blowing port 30g is provided in an air flow passage 30h connecting the suction port 30f and the blowing port 30g. The indoor heat exchanger 31 formed into a reverse V-shape by having a bent portion 30n is arranged above the indoor fan 32. The indoor heat exchanger 31 and the indoor fan 32 are fixed to the base 30j for attaching the indoor unit 3 to a wall surface.

The blowing port 30g is formed by a lower portion of the base 30j and a lower face of the casing 30k attached to the front panel 30e. Top surfaces of the base 30j and the casing 30k are a drain pan 30m which receives dew condensation water generated in the indoor heat exchanger 31.

The blowing port 30g is provided with two vertical wind direction plates 35 deflecting the air blown from the blowing port 30g in a vertical direction. Each of two vertical wind direction plates 35 is formed of a resin material, and when the indoor unit 3 is stopped, the vertical wind direction plates 35 can pivot to close the blowing port 30g. The vertical wind direction plates 35 are fixed to a rotation shaft (not shown), and the vertical wind direction plates 35 pivot in the vertical direction to deflect the air blown from the blowing port 30g in the vertical direction.

A plurality of horizontal wind direction plates 36 deflecting the air blown from the blowing port 30g in a horizontal direction are provided on the upstream side of the blowing port 30g (the inside of the indoor unit housing 30) as seen from the vertical wind direction plate 35. The horizontal wind direction plates 36 are formed of a resin material and are fixed to a rotation shaft (not shown), and the horizontal wind direction plates 36 pivot in a horizontal direction to deflect the air blown from the blowing port 30g in the horizontal direction.

A filter 38 for removing dust contained in the air taken into the inside of the indoor unit 3 is arranged upstream of the indoor heat exchanger 31 (between the indoor heat exchanger 31 and the suction port 30f) in the air flow passage 30h. The filter 38 is formed, for example, by knitting fibers formed of a resin material in a mesh shape. When the indoor air taken into the inside of the housing 30 of the indoor unit 3 from the suction port 30f passes through the filter 38, dust larger than the mesh of the filter 38 contained in the indoor air is captured by the filter 38.

### <Configuration of Air Conditioner and Refrigerant Circuit>

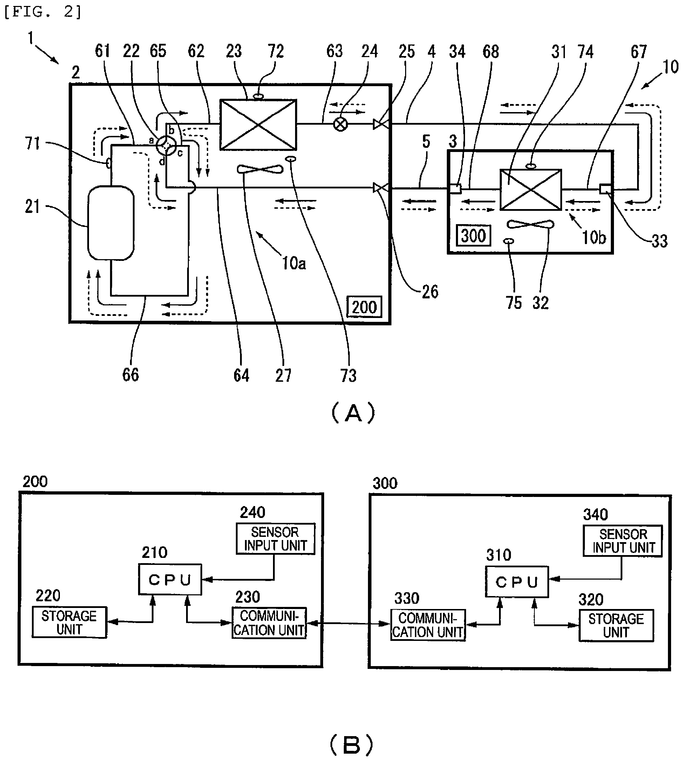

Next, each of devices constituting the outdoor unit 2 and the indoor unit 3, and the refrigerant circuit of the air conditioner 1 in which the outdoor unit 2 and the indoor unit 3 are connected by the refrigerant piping will be described in detail with reference to FIG. 2. As described above, the outdoor unit 2 and the indoor unit 3 are connected by the liquid pipe 4 and the gas pipe 5 which are the refrigerant pipings. In detail, a closing valve 25 of the outdoor unit 2 and the liquid pipe connection portion 33 of the indoor unit 3 are connected by the liquid pipe 4. In addition, a closing valve 26 of the outdoor unit 2 and a gas pipe connection portion 34 of the indoor unit 3 are connected by the gas pipe 5. The refrigerant circuit 10 of the air conditioner 1 is configured as described above.

### <Configuration of Outdoor Unit>

The outdoor unit 2 includes a compressor 21, a four-way valve 22, an outdoor heat exchanger 23, an outdoor fan 27, a closing valve 25 to which the liquid pipe 4 is connected, and a closing valve 26 to which the gas pipe 5 is connected, an expansion valve 24 and an outdoor unit control means 200. Each of devices excluding the outdoor fan 27 and the outdoor unit control means 200 is connected to one another by each of the refrigerant pipings which will be described in detail below to constitute an outdoor unit refrigerant circuit 10a which forms a part of the refrigerant circuit 10.

The compressor 21 is a variable displacement compressor which can change an operation displacement by an inverter (not shown) controlling the rotation speed. A refrigerant discharge side of the compressor 21 is connected to a port a of the four-way valve 22 by a discharge pipe 61. A refrigerant inlet side of the compressor 21 is connected to a port c of the four-way valve 22 by an inlet pipe 66.

The four-way valve 22 is a valve for switching the flow direction of the refrigerant, and has four ports a, b, c, d. The port a is connected to the refrigerant discharge side of the compressor 21 by the discharge pipe 61 as described above. The port b is connected to one refrigerant inlet/outlet of the outdoor heat exchanger 23 by a refrigerant piping 62. The port c is connected to the refrigerant inlet side of the compressor 21 by the inlet pipe 66 as described above. The port d is connected to the closing valve 26 by the outdoor unit gas pipe 64.

The outdoor heat exchanger 23 performs a heat exchange between the refrigerant and the outside air taken into the outdoor unit 2 by the rotation of the outdoor fan 27 which will be described later. One refrigerant inlet/outlet of the outdoor heat exchanger 23 is connected to the port b of the four-way valve 22 by the refrigerant piping 62 as described above, and the other refrigerant inlet/outlet is connected to the closing valve 25 by the outdoor unit liquid pipe 63.

The expansion valve 24 is, for example, an electronic expansion valve. The expansion valve 24 adjusts the amount of refrigerant flowing to the indoor unit 3 by adjusting the opening degree thereof according to a cooling capacity and a heating capacity required in the indoor unit 3.

The outdoor fan 27 is formed of a resin material and arranged in the vicinity of the outdoor heat exchanger 23. The outdoor fan 27 is rotated by a fan motor (not shown) to take the outside air from the suction port (not shown) of the outdoor unit 2 into the inside of the outdoor unit 2 and discharges the outside air heat-exchanged with the refrigerant in the outdoor heat exchanger 23 from the blowing port (not shown) of the outdoor unit 2 to the outside of the outdoor unit 2.

In addition to each of the devices described above, the outdoor unit 2 is provided with three sensors which will be described below. As shown in FIG. 1(A), the discharge pipe 61 is provided with a discharge temperature sensor 71 which detects the temperature of the refrigerant discharged from the compressor 21. An outdoor heat exchange temperature sensor 72 which detects the temperature of the outdoor heat exchanger 23 (hereinafter, described as outdoor heat exchange temperature) is provided in a substantially intermediate portion of a refrigerant path (not shown) of the outdoor heat exchanger 23. Further, an outside air temperature sensor 73 which detects the temperature of the outside air flowing to the inside of the outdoor unit 2, that is, the outside air temperature, is provided in the vicinity of a suction port (not shown) of the outdoor unit 2.

The outdoor unit control means 200 is mounted on a control board stored in an electric component box (not shown) of the outdoor unit 2. As shown in FIG. 2 (B), the outdoor unit control means 200 includes a CPU 210, a storage unit 220, a communication unit 230, and a sensor input unit 240.

The storage unit 220 includes a ROM and a RAM, and stores a control program of the outdoor unit 2, a detection value corresponding to a detection signal from various sensors, a control state of the compressor 21 and the outdoor fan 27, and the like. The communication unit 230 is an interface which communicates with the indoor unit 3. The sensor input unit 240 acquires a detection result from various sensors of the outdoor unit 2 and outputs the detection result to the CPU 210.

The CPU 210 acquires the detection result from each sensor of the outdoor unit 2 described above via the sensor input unit 240. The CPU 210 acquires a control signal transmitted from the indoor unit 3 via the communication unit 230. The CPU 210 performs a drive control of the compressor 21 and the outdoor fan 27 based on the acquired detection result and control signal. The CPU 210 performs a switching control of the four-way valve 22 based on the acquired detection result and control signal. Furthermore, the CPU 210 adjusts the opening degree of the expansion valve 24 based on the acquired detection result and control signal.

### <Configuration of Indoor Unit>

The indoor unit 3 includes the liquid pipe connection portion 33 to which the liquid pipe 4 is connected, the gas pipe connection portion 34 to which the gas pipe 5 is connected, and an indoor unit control means 300 in addition to the indoor heat exchanger 31, the indoor fan 32, the vertical wind direction plate 35, the horizontal wind direction plate 36, and the filter 38 described above. Each of devices excluding the indoor fan 32, the vertical wind direction plate 35, the horizontal wind direction plate 36, the filter 38 and the indoor unit control means 300 is connected to one another by each of the refrigerant pipings which will be described in detail below to constitute an indoor unit refrigerant circuit 10b which forms a part of the refrigerant circuit 10.

The indoor heat exchanger 31 performs a heat exchange between the refrigerant and the indoor air taken into the inside of the indoor unit 3 from the suction port 30f of the indoor unit 3 by the rotation of the indoor fan 32, one refrigerant inlet/outlet is connected to the liquid pipe connection portion 33 by an indoor unit liquid pipe 67, and the other refrigerant inlet/outlet is connected to the gas pipe connection portion 34 by an indoor unit gas pipe 68. The indoor heat exchanger 31 functions as an evaporator in a case where the indoor unit 3 performs the cooling operation, and functions as a condenser in a case where the indoor unit 3 performs the heating operation. In the liquid pipe connection portion 33 and the gas pipe connection portion 34, each of the refrigerant pipings is connected by welding, and a flare nut or the like.

The indoor fan 32 is formed of a resin material, and as described above, is arranged downstream of the indoor heat exchanger 31 in the air flow passage 30h. The indoor fan 32 is rotated by a fan motor (not shown) to take the indoor air from the suction port 30f of the indoor unit 3 into the indoor unit 3 and discharges the indoor air heat-exchanged with the refrigerant in the indoor heat exchanger 31 from the blowing port 30g of the indoor unit 3 indoors.

In addition to each of the devices described above, the indoor unit 3 is provided with two sensors which will be described below. An indoor heat exchange temperature sensor 74 that detects the temperature of the indoor heat exchanger 31 (hereinafter, described as indoor heat exchange temperature) is provided in a substantially intermediate portion of a refrigerant path (not shown) of the indoor heat exchanger 31. Further, as shown in FIG. 1(B), an indoor temperature sensor 75 which detects the temperature of the air taken into the inside of the indoor unit 3 from the suction port 30f, that is, the indoor temperature is provided between the suction port 30f of the indoor unit 3 and the filter 38.

The indoor unit control means 300 is mounted on a control board stored in an electric component box (not shown) of the indoor unit 3. As shown in FIG. 2(B), the indoor unit control means 300 includes a CPU 310, a storage unit 320, a communication unit 330, and a sensor input unit 340.

The storage unit 320 includes a ROM and a RAM, and stores a control program of the indoor unit 3, a detection value corresponding to a detection signal from various sensors, a control state of the indoor fan 32, and the like. The communication unit 330 is an interface for communicating with the outdoor unit control means 200 of the outdoor unit 2. The sensor input unit 340 acquires a detection result from the indoor heat exchange temperature sensor 74 or the indoor temperature sensor 75 of the indoor unit 3 and outputs the detection result to the CPU 110.

The CPU 310 acquires the detection result from each sensor of the indoor unit 3 described above via the sensor input unit 340. In addition, the CPU 310 acquires an operation information signal including an operation mode (cooling operation and heating operation), an air volume, and the like, which is transmitted from a remote controller (not shown) operated by the user via the communication unit 330. The CPU 310 performs a drive control of the indoor fan 32, the vertical wind direction plate 35, and the horizontal wind direction plate 36 based on the acquired detection result and an operation information signal.

### <Operation of Refrigerant Circuit>

Next, a flow of the refrigerant and the operation of each part in the refrigerant circuit 10 in an air conditioning operation of the air conditioner 1 in the present embodiment will be described with reference to FIG. 2 (A). In the following description, first, a case where the indoor unit 3 performs the cooling operation will be described, and then, a case where the indoor unit 3 performs the heating operation will be described. In FIG. 2 (A), a solid arrow indicates the flow of the refrigerant in the cooling operation, and a broken arrow indicates the flow of the refrigerant in the heating operation.

### <Cooling Operation>

When the indoor unit 3 performs the cooling operation, as shown in FIG. 2(A), the four-way valve 22 is switched to be in a state indicated by a solid line, that is, switched such that the port a and the port b of the four-way valve 22 communicate with each other and the port c and the port d communicate with each other. Thus, in the refrigerant circuit 10, the outdoor heat exchanger 23 functions as a condenser and the indoor heat exchanger 31 functions as an evaporator, and the refrigerant circuit 10 is a cooling cycle in which the refrigerant circulates in the direction indicated by the solid arrow.

In the state of the refrigerant circuit 10 as described above, the high-pressure refrigerant discharged from the compressor 21 flows into the four-way valve 22 by flowing through the discharge pipe 61 and flows into the outdoor heat exchanger 23 by flowing from the four-way valve 22 through the refrigerant piping 62. The refrigerant flowing into the outdoor heat exchanger 23 is condensed by the heat exchange with the outside air taken into the inside of the outdoor unit 2 by the rotation of the outdoor fan 27. The refrigerant flowing from the outdoor heat exchanger 23 into the outdoor unit liquid pipe 63 is decompressed when the refrigerant passes through the expansion valve 24 that has an opening degree corresponding to the cooling capacity required by the user in the indoor unit 3, and flows into the liquid pipe 4 via the closing valve 25.

The refrigerant flowing through the liquid pipe 4 and flowing into the indoor unit 3 via the liquid pipe connection portion 33 flows through the indoor unit liquid pipe 67 and flows into the indoor heat exchanger 31, and the refrigerant is heat-exchanged with the indoor air taken from the suction port 30f into the air flow passage 30h of the indoor unit 3 by the rotation of the indoor fan 32 and is evaporated. Thus, the indoor heat exchanger 31 functions as an evaporator and the indoor air heat-exchanged with the refrigerant in the indoor heat exchanger 31 is blown into the room from the blowing port 30g, thereby a cooling in the room in which the indoor unit 3 is installed is performed.

The refrigerant flowing out from the indoor heat exchanger 31 flows through the indoor unit gas pipe 68 and flows into the gas pipe 5 via the gas pipe connection portion 34. The refrigerant flowing through the gas pipe 5 and flowing into the outdoor unit 2 through the closing valve 26 flows through the outdoor unit gas pipe 64, the four-way valve 22, and the inlet pipe 66 in this order, and is taken into the compressor 21 and compressed again.

### <Heating Operation>

When the indoor unit 3 performs the heating operation, as shown in FIG. 2(A), the four-way valve 22 is switched to be in a state indicated by a broken line, that is, switched such that the port a and the port d of the four-way valve 22 communicate with each other and the port b and the port c communicate with each other. Thus, in the refrigerant circuit 10, the outdoor heat exchanger 23 functions as an evaporator and the indoor heat exchanger 31 functions as a condenser, and the refrigerant circuit 10 is a heating cycle in which the refrigerant circulates in the direction indicated by the broken arrow.

In the state of the refrigerant circuit 10 as described above, the high-pressure refrigerant discharged from the compressor 21 flows into the four-way valve 22 by flowing through the discharge pipe 61 and flows into the gas pipe 5 via the closing valve 26 by flowing through the outdoor unit gas pipe 64 from the four-way valve 22. The refrigerant flowing through the gas pipe 5 flows into the indoor unit 3 via the gas pipe connection portion 34.

The refrigerant flowing into the indoor unit 3 flows through the indoor unit gas pipe 68 and flows into the indoor heat exchanger 31, and the refrigerant is heat-exchanged with the indoor air taken from the suction port 30f into the air flow passage 30h of the indoor unit 3 by the rotation of the indoor fan 32 and is condensed. Thus, the indoor heat exchanger 31 functions as a condenser and the indoor air heat-exchanged with the refrigerant in the indoor heat exchanger 31 is blown into the room from the blowing port 30g, thereby a heating in the room in which the indoor unit 3 is installed is performed.

The refrigerant flowing out from the indoor heat exchanger 31 flows through the indoor unit liquid pipe 67 and flows into the liquid pipe 4 via the liquid pipe connection portion 33. The refrigerant flowing through the liquid pipe 4 and flowing into the outdoor unit 2 through the closing valve 25 flows through the outdoor unit liquid pipe 63 and is decompressed when the refrigerant passes through the expansion valve 24 that has an opening degree corresponding to the heating capacity required by the user in the indoor unit 3.

The refrigerant flowing into the outdoor heat exchanger 23 through the expansion valve 24 is evaporated by the heat exchange with the outside air taken into the inside of the outdoor unit 2 by the rotation of the outdoor fan 27. The refrigerant flowing from the outdoor heat exchanger 23 into the refrigerant piping 62 flows through the four-way valve 22 and the inlet pipe 66, and is taken into the compressor 21 to be compressed again.

### <Drive Control of Compressor, Outdoor Fan, and Indoor fan in Heating Operation>

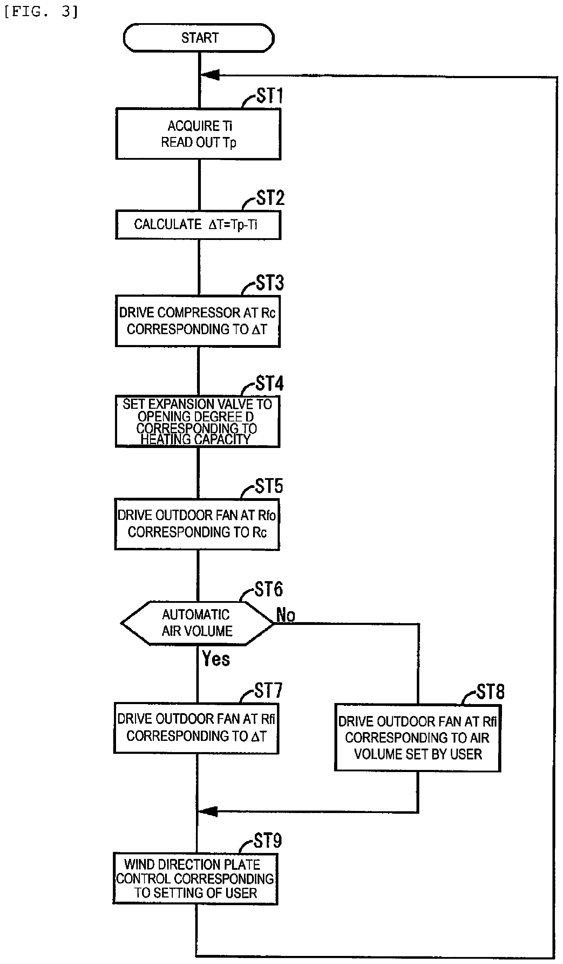

Next, a drive control of the compressor 21, the outdoor fan 27 and the indoor fan 32 in the heating operation (hereinafter, described as heating operation control) will be described in detail using the flowchart shown in FIG. 3. In FIG. 3, ST represents a step of a process, and the numbers following this represent a step number.

The outdoor unit control means 200 and the indoor unit control means 300 described above constitute the control means of the present invention. Therefore, in the following description of a control and a process including FIG. 3, the description of the control of the air conditioner 1 will be made mainly by using control means, and the description of the control of the individual device of the outdoor unit 2 and the indoor unit 3 will be made mainly by using (CPU 210 of) the outdoor unit control means 200 and (CPU 310 of) the indoor unit control means 300 appropriately.

When there is a start instruction of the heating operation by the instruction of the user, the control means acquires an indoor temperature (hereinafter, described as indoor temperature Ti) and reads out a set temperature (hereinafter, described as set temperature Tp) (ST1). Specifically, the CPU 310 of the indoor unit control means 300 periodically (for example, every 30 seconds) acquires the indoor temperature Ti detected by the indoor temperature sensor 75 via the sensor input unit 340. Further, the CPU 310 reads out the set temperature Tp which is set by the operation of the remote controller (not shown) by the user and stored in the storage unit 320.

Next, the control means calculates a temperature difference (hereinafter, described as temperature difference ΔT) between the set temperature Tp read out in ST1 and the acquired indoor temperature Ti (ST2). Specifically, the CPU 310 subtracts the indoor temperature Ti from the set temperature Tp to calculate the temperature difference ΔT.

Next, the control means drives the compressor 21 at the rotation speed of the compressor 21 (hereinafter, described as compressor rotation speed Rc) corresponding to the temperature difference ΔT calculated in ST2 (ST3). Specifically, the CPU 310 transmits the compressor rotation speed Rc according to the calculated temperature difference ΔT to the outdoor unit 2 via the communication unit 330. The CPU 210 of the outdoor unit control means 200 receiving the compressor rotation speed Rc transmitted from the indoor unit 3 via the communication unit 230 drives the compressor 21 at the received compressor rotation speed Rc.

Next, the control means sets the opening degree of the expansion valve 24 (hereinafter, described as expansion valve opening degree D) to an opening degree corresponding to the heating capacity required by the user in the indoor unit 3 (ST4) . Specifically, the CPU 310 adjusts the expansion valve opening degree D such that the discharge temperature of the compressor 21 detected by the discharge temperature sensor 71 in the heating operation becomes a predetermined target temperature.

Next, the control means drives the outdoor fan 27 at the rotation speed of the outdoor fan 27 (hereinafter, described as outdoor fan rotation speed Rfo) corresponding to the compressor rotation speed Rc determined in ST3 (ST5). Specifically, the CPU 210 drives the outdoor fan 27 at the outdoor fan rotation speed Rfo corresponding to the compressor rotation speed Rc.

Next, the control means determines whether or not the air volume of the conditioned air blown from the blowing port 30g of the indoor unit 3 by the user is set automatically (ST6). When the air volume is set automatically (ST6-Yes), the control means drives the indoor fan 32 at the rotation speed of the indoor fan 32 (hereinafter, described as indoor fan rotation speed Rfi) corresponding to the temperature difference ΔT calculated in ST2 (ST7). When the air volume is not set automatically (ST6-No), the control means drives the indoor fan 32 at the indoor fan rotation speed Rfi corresponding to the air volume set by the user (ST8). Specifically, the CPU 310 drives the indoor fan 32 at the indoor fan rotation speed Rfi corresponding to any of the temperature difference ΔT or the air volume set by the user.

Next, the control means controls the vertical wind direction plate 35 and the horizontal wind direction plate 36 such that a wind direction becomes a wind direction set by the user (ST9), and the process returns to ST1. Specifically, when a setting by the user is "swing", the CPU 310 makes the vertical wind direction plate 35 automatically pivot vertically, and makes the horizontal wind direction plate 36 automatically pivot horizontally. In addition, when a setting by the user is a predetermined position, the vertical wind direction plate 35 and the horizontal wind direction plate 36 pivot so as to be at the position set by the user.

### <Protection Control in Heating Operation>

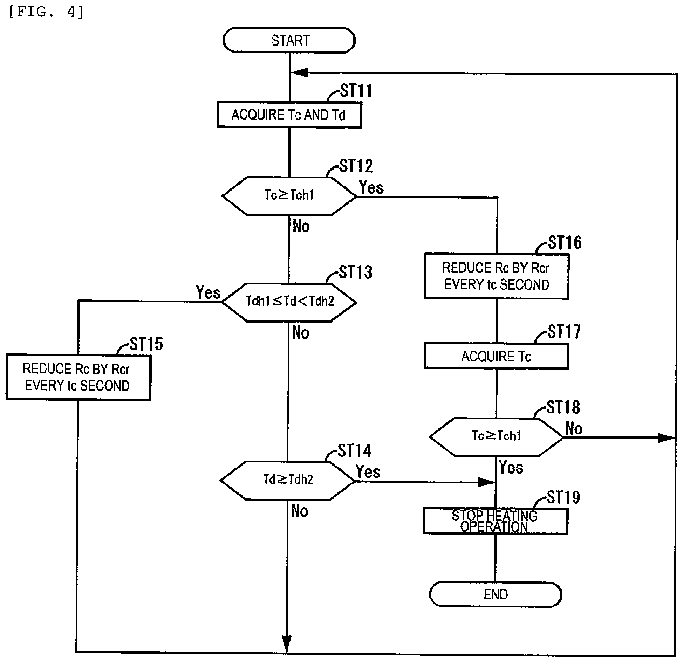

Next, a protection control in the heating operation, which prevents the discharge pressure of the compressor 21 from exceeding an upper limit value of the use range when the heating operation is performed, will be described with reference to FIG. 4. In FIG. 4, ST represents a step of a process, and the numbers following this represent a step number.

First, the control means acquires the temperature of the indoor heat exchanger 31 (hereinafter, described as indoor heat exchange temperature Tc) and the discharge temperature of the compressor 21 (hereinafter, described as discharge temperature Td) (ST11). Specifically, the CPU 310 periodically (for example, every 30 seconds) acquires the indoor heat exchange temperature Tc detected by the indoor heat exchange temperature sensor 74 via the sensor input unit 340. On the other hand, the CPU 210 periodically (for example, every 30 seconds) acquires the discharge temperature Td detected by the discharge temperature sensor 71 via the sensor input unit 240.

Next, the control means determines whether or not the indoor heat exchange temperature Tc acquired in ST11 is equal to or higher than a predetermined temperature (hereinafter, described as first threshold indoor heat exchange temperature Tch1) (ST12). Specifically, the CPU 310 reads out the first threshold indoor heat exchange temperature Tch1 stored in advance in the storage unit 320 and compares the first threshold indoor heat exchange temperature Tch1 with the indoor heat exchange temperature Tc. Here, the first threshold indoor heat exchange temperature Tch1 is obtained by performing a test or the like in advance, and is a temperature which is lower than the indoor heat exchange temperature Tc corresponding to the upper limit value of the use range of the discharge pressure of the compressor 21 described above by a predetermined temperature, for example, 55°C.

When the indoor heat exchange temperature Tc is equal to or higher than the first threshold indoor heat exchange temperature Tch1 (ST12-Yes), the control means reduces the rotation speed of the compressor 21 by a predetermined compressor release rotation speed (hereinafter, described as a compressor release rotation speed Rcr) every predetermined compressor release interval time (hereinafter, described as a compressor release interval time tc) (ST16). Specifically, the CPU 310 transmits a signal that the indoor heat exchange temperature Tc is determined to be equal to or higher than the first threshold indoor heat exchange temperature Tch1 to the outdoor unit 2 via the communication unit 330, and the CPU 210 receiving this signal via the communication unit 230 controls the compressor 21 such that the current compressor rotation speed Rc becomes a rotation speed which is reduced by the compressor release rotation speed Rcr every compressor release interval time tc. Here, the compressor release interval time tc and the compressor release rotation speed Rcr are values that it is confirmed that the compressor release interval time tc and the compressor release rotation speed Rcr have an effect of lowering the indoor heat exchange temperature Tc by performing a test in advance, for example, the compressor release interval time tc is 60 seconds, and the compressor release rotation speed Rcr is 2 rps.

The control means that has completed the process of ST16 acquires the indoor heat exchange temperature Tc (ST17), and determines whether or not the acquired indoor heat exchange temperature Tc is equal to or higher than the first threshold indoor heat exchange temperature Tch1 (ST18). Specifically, the CPU 310 acquires the indoor heat exchange temperature Tc, and determines whether or not the acquired indoor heat exchange temperature Tc is equal to or higher than the first threshold indoor heat exchange temperature Tch1.

When the acquired indoor heat exchange temperature Tc is not equal to or higher than the first threshold indoor heat exchange temperature Tch1 (ST18-No), the control means returns the process to ST11. When the acquired indoor heat exchange temperature Tc is equal to or higher than the first threshold indoor heat exchange temperature Tch1 (ST18-Yes), the control means stops the heating operation (ST19), and ends the protection control in the heating operation. Specifically, the CPU 310 stops the indoor fan 32 when the acquired indoor heat exchange temperature Tc is equal to or higher than the first threshold indoor heat exchange temperature Tch1, and transmits a signal indicating that the acquired indoor heat exchange temperature Tc is equal to or higher than the first threshold indoor heat exchange temperature Tch1 to the outdoor unit 2 via the communication unit 330. The CPU 210 that receives this signal via the communication unit 230 stops the compressor 21 and the outdoor fan 27.

In ST12, when the indoor heat exchange temperature Tc is not equal to or higher than the first threshold indoor heat exchange temperature Tch1 (ST12-No), the control means determines whether or not the discharge temperature Td detected in ST11 is equal to or higher than a predetermined first threshold discharge temperature (hereinafter, described as a first threshold discharge temperature Tdh1) and lower than a predetermined second threshold discharge temperature (hereinafter, described as a second threshold discharge temperature Tdh2) higher than the first threshold discharge temperature Tdh1 (ST13). Specifically, the CPU 210 periodically (for example, every 30 seconds) acquires the discharge temperature Td detected by the discharge temperature sensor 71 via the sensor input unit 240 and determines whether or not the acquired discharge temperature Td is equal to or higher than the first threshold discharge temperature Tdh1 stored in the storage unit 220 and lower than the second threshold discharge temperature Tdh2.

Here, the first threshold discharge temperature Tdh1 and the second threshold discharge temperature Tdh2 are obtained by performing a test or the like in advance, and are stored in the storage unit 220. The first threshold discharge temperature Tdh1 and the second threshold discharge temperature Tdh2 are temperatures which are lower than the discharge temperature Td corresponding to the upper limit value of the use range of the discharge pressure of the compressor 21 described above by a predetermined temperature, for example, the first threshold discharge temperature Tdh1 is 105°C and the second threshold discharge temperature Tdh2 is 115°C.

When the acquired discharge temperature Td is equal to or higher than the first threshold discharge temperature Tdh1 and lower than the second threshold discharge temperature Tdh2 (ST13-Yes), the control means reduces the rotation speed of the compressor 21 by the compressor release rotation speed Rcr every compressor release interval time tc (ST15), and the process returns to ST11. Since the process of ST15 has the same contents as the process of ST16 described above, detailed description will be omitted. In the process of ST15 and ST16, in a case where the compressor rotation speed Rc is reduced by the compressor release rotation speed Rcr, thereby the compressor rotation speed Rc is decreased to the lower limit rotation speed in the use range, the compressor rotation speed Rc is maintained at the lower limit rotation speed when the process of ST15 and ST16 is performed next.

In ST13, when the acquired discharge temperature Td is not equal to or higher than the first threshold discharge temperature Tdh1 and lower than the second threshold discharge temperature Tdh2 (ST13-No), the control means determines whether or not the acquired discharge temperature Td is equal to or higher than the second threshold discharge temperature Tdh2 (ST14). Specifically, the CPU 210 determines whether or not the acquired discharge temperature Td is equal to or higher than the second threshold discharge temperature Tdh2.

When the acquired discharge temperature Td is equal to or higher than the second threshold discharge temperature Tdh2 (ST14-Yes), the control means causes the process to proceed to ST19. When the acquired discharge temperature Td is not equal to or higher than the second threshold discharge temperature Tdh2 (ST14-No), that is, when the acquired discharge temperature Td is lower than the first threshold discharge temperature Tdh1, the control means returns the process to ST11.

### <Regarding Indoor Heat Exchange Heating Operation>

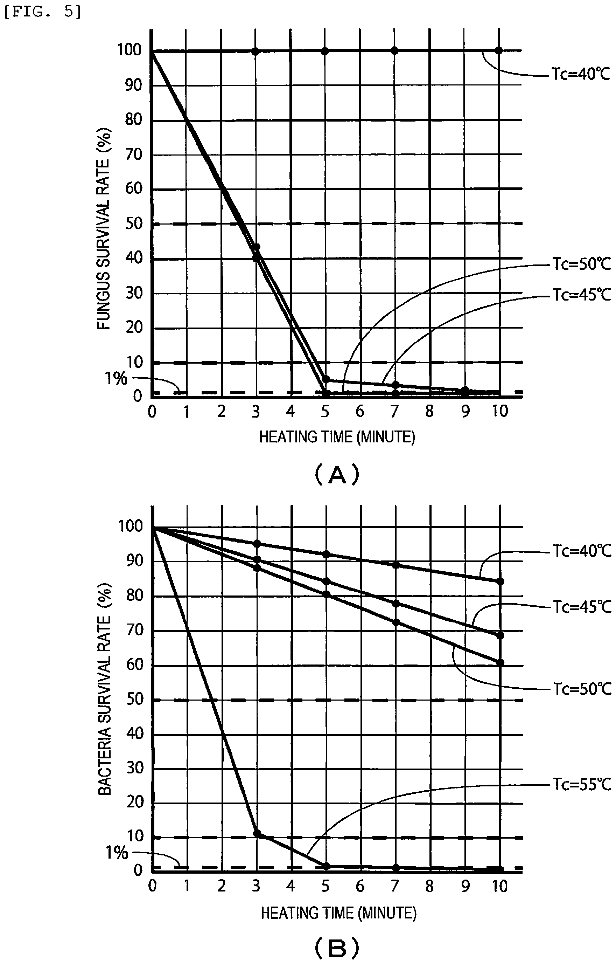

Next, the indoor heat exchange heating operation of the present invention will be described with reference to FIGs. 5 to 11. Here, the purpose of the indoor heat exchange heating operation is to kill fungi and bacteria to reduce the number of the fungi and bacteria by setting the refrigerant circuit 10 of the air conditioner 1 to be in the same state as in the heating operation and making the temperature of the indoor heat exchanger 31 higher than the temperature in the heating operation (about 40°C) . In the present embodiment, the remote controller (not shown) for operating the indoor unit 3 is provided with a button for instructing a start of the indoor heat exchange heating operation, and when the user operates this button, the indoor heat exchange heating operation is performed, but the indoor heat exchange heating operation may be automatically performed when the cooling operation or a dehumidifying operation ends. In addition, in the air conditioner 1, optimal timing is determined and the indoor heat exchange heating operation may be performed, for example, the indoor heat exchange heating operation is performed when the indoor unit 3 includes a human detection sensor and it is detected by the human detection sensor that the user is not in the room.

By performing a test, the applicant found that the number of fungi and bacteria can be significantly reduced by maintaining the indoor heat exchange temperature Tc at 55°C or higher for 10 minutes when the above described indoor heat exchange heating operation is performed. Hereinafter, the obtained knowledge will be described with reference to FIG. 5.

A graph shown in FIG. 5 represents the number of fungi and bacteria according to a time change when the indoor heat exchange temperature Tc is maintained at a constant temperature in a state where dew condensation water exists in the indoor heat exchanger 31. FIG. 5 (A) is a graph of Cladosporium (hereinafter, described as "fungus"), which is a species of fungus (black mold) that looks blackish. A horizontal axis of the graph in FIG. 5(A) is a heating time (unit: minute) which is the time for maintaining the indoor heat exchange temperature Tc at 40°C, 45°C, and 50°C, and a vertical axis is a survival rate of fungus in which the number of fungi (the number of fungus colonies) is set to 100 when a heating time is 0 minutes (before heating) (fungus survival rate in FIG. 5(A), Unit: %).

As shown in FIG. 5(A), in a case where the indoor heat exchange temperature Tc is 40°C, the number of fungi hardly changes even when the heating time becomes 10 minutes, and the fungus survival rate after 10 minutes is almost 100%. On the other hand, in a case where the indoor heat exchange temperature Tc is 45°C or 50°C, the fungus survival rate becomes smaller than 10% at any indoor heat exchange temperature Tc at the time when the heating time becomes 5 minutes. In particular, in a case where the indoor heat exchange temperature Tc is set to 50°C, the fungus survival rate becomes less than 1% at the time when the heating time becomes 5 minutes, and the number of fungi is significantly reduced in a short time.

FIG. 5 (B) is a graph about Escherichia coli which is a species of bacteria. A horizontal axis of the graph in FIG. 5(B) is a heating time (unit: minute) which is the time for maintaining the indoor heat exchange temperature Tc at 40°C, 45°C, 50°C, and 55°C, and a vertical axis is a survival rate of E. coli in which the number of Escherichia coli is set to 100 when a heating time is 0 minutes (before heating) (bacteria survival rate in FIG. 5(B), Unit: %).

As shown in FIG. 5(B), in a case where the indoor heat exchange temperature Tc is 50°C or less, the bacteria survival rate does not become 50% or less even when the heating time becomes 10 minutes, and thus it cannot be said that the number of bacteria can be significantly reduced. On the other hand, in a case where the indoor heat exchange temperature Tc is 55°C, the bacteria survival rate becomes smaller than 10% at the time when the heating time becomes 4 minutes, the bacteria survival rate is almost 1% at the time when the heating time becomes 5 minutes, and the bacteria survival rate is less than 1% when the heating time is further extended to 10 minutes. That is, the number of bacteria can be significantly reduced by maintaining the indoor heat exchange temperature Tc at 55°C for 10 minutes.

In the graph of FIG. 5 described above, in order to significantly reduce the survival rate of fungus and bacteria existing in the indoor heat exchanger 31, it is preferable that the indoor heat exchange temperature Tc is set to 55°C or higher, and this state is maintained for 10 minutes in a state where dew condensation water exists in the indoor heat exchanger 31, for example, in a state where dew condensation water generated in the indoor heat exchanger 31 when the air conditioner 1 performs the cooling operation is left after the cooling operation ends. This is because the amount of heat acting on the fungus and bacteria from dew condensation water is more than the amount of heat acting on the fungus and bacteria only from the surface of the indoor heat exchanger 31 without the dew condensation water since the entire surface of fungus and bacteria is covered with the dew condensation water.

Dew condensation water generated in the indoor heat exchanger 31 when the air conditioner 1 performs the cooling operation is not dried completely in a portion, through which air is difficult to pass, in the vicinity of a V-shaped bent portion 30n in the indoor heat exchanger 31 and the drain pan 30m even when a drying operation is performed to evaporate the dew condensation water by driving the indoor fan 32 after the cooling operation ends to make air pass through the indoor heat exchanger 31. As described above, even if there is a portion where the dew condensation water is not completely dried and stagnates for a long time, the dew condensation water stagnating in a portion through which air is difficult to pass as described above becomes 55°C or higher when the indoor heat exchange heating operation according to the present embodiment is performed. Therefore the fungus and bacteria survival rate growing in the portion can be significantly reduced.

### <Indoor Fan Control Table and Outdoor fan Control Table>

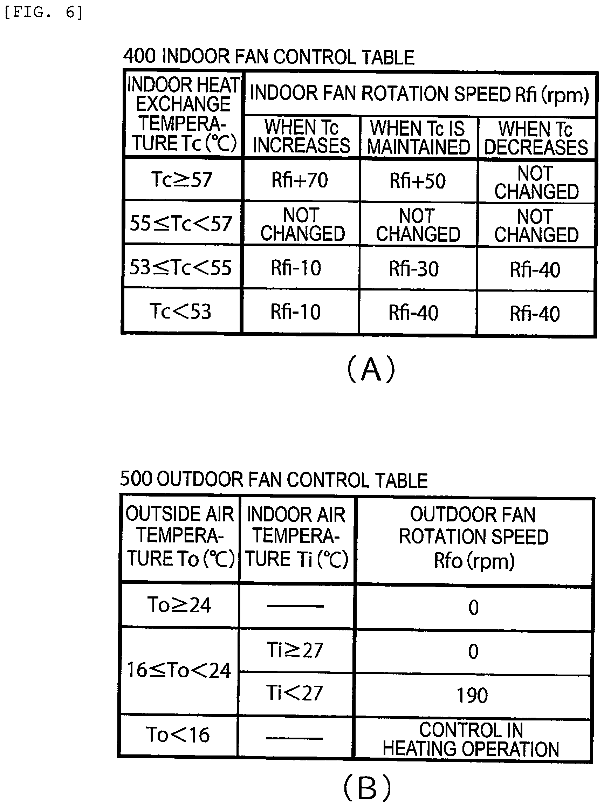

Next, tables used for controlling the indoor fan 32 and controlling the outdoor fan 27 in the indoor heat exchange heating operation, which is used when performing the indoor heat exchange heating operation, will be described with reference to FIG. 6

### <Indoor Fan Control Table>

First, an indoor fan control table 400 shown in FIG. 6(A) will be described. The indoor fan control table 400 is obtained by performing a test or the like in advance and is stored in the storage unit 320 of the indoor unit control means 300. In the indoor fan control table 400, it is found that the indoor heat exchange temperature Tc can be maintained in a range of 55°C to 57°C by controlling the indoor fan 32 based on the indoor fan control table 400 when the indoor heat exchanger 31 functions as a condenser in the indoor heat exchange heating operation.

In the indoor fan control table 400, the indoor heat exchange temperature Tc (unit: °C) and the indoor fan rotation speed Rfi (unit: rpm) according to the indoor heat exchange temperature Tc when rising / when maintaining / when decreasing are determined. Here, "when the indoor heat exchange temperature Tc increases ("when Tc increases" in FIG. 6(A))" means that when two indoor heat exchange temperatures Tc detected by intervals are used, the indoor heat exchange temperature Tc detected later is higher than the indoor heat exchange temperature Tc detected earlier. Further, "when the indoor heat exchange temperature Tc is maintained ("when Tc is maintained" in FIG. 6(A)) " means that the indoor heat exchange temperature Tc detected earlier is equal to the indoor heat exchange temperature Tc detected later. In addition, "when the indoor heat exchange temperature Tc decreases ("when Tc decreases" in FIG. 6(A))" means that when two indoor heat exchange temperatures Tc detected by intervals are used, the indoor heat exchange temperature Tc detected later is lower than the indoor heat exchange temperature Tc detected earlier.

Specifically, in a case where the indoor heat exchange temperature Tc is 57°C or higher, the indoor fan rotation speed Rfi "when Tc increases" is a rotation speed obtained by adding 70 rpm to the current indoor fan rotation speed Rfi. In a case where the indoor heat exchange temperature Tc is 55°C or higher and lower than 57°C, the current indoor fan rotation speed Rfi is not changed. In a case where the indoor heat exchange temperature Tc is 53°C or higher and lower than 55°C, and in a case where the indoor heat exchange temperature Tc is lower than 53°C, a rotation speed is obtained by subtracting 10 rpm from the current indoor fan rotation speed Rfi.

In a case where the indoor heat exchange temperature Tc is lower than 53°C or in a case where the indoor heat exchange temperature Tc is 53°C or higher and lower than 55°C when the indoor heat exchange temperature Tc is rising, the indoor fan rotation speed Rfi is reduced by 10 rpm every time the indoor heat exchange temperature Tc is detected (for example, every 30 seconds). Accordingly, the amount of air flowing to the indoor heat exchanger 31 decreases, and the indoor heat exchange temperature Tc becomes 55°C or higher quickly.

In a case where the indoor heat exchange temperature Tc is 55°C or higher and lower than 57°C when the indoor heat exchange temperature Tc is rising, the indoor fan rotation speed Rfi is not changed. Accordingly, the amount of air flowing to the indoor heat exchanger 31 is not changed, and the indoor heat exchange temperature Tc is maintained in a range of 55°C or higher and lower than 57°C. When the indoor heat exchange temperature Tc is 57°C or higher, the indoor heat exchange temperature Tc is prevented from being 59°C or higher by increasing the indoor fan rotation speed Rfi by 70 rpm to make the amount of air flowing to the indoor heat exchanger 31 increase.

Next, in a case where the indoor heat exchange temperature Tc is 57°C or higher, the indoor fan rotation speed Rfi "when Tc is maintained" is a rotation speed obtained by adding 50 rpm to the current indoor fan rotation speed Rfi. In a case where the indoor heat exchange temperature Tc is 55°C or higher and lower than 57°C, the current indoor fan rotation speed Rfi is not changed. In a case where the indoor heat exchange temperature Tc is 53°C or higher and lower than 55°C, a rotation speed is obtained by subtracting 30 rpm from the current indoor fan rotation speed Rfi. In a case where the indoor heat exchange temperature Tc is lower than 53°C, a rotation speed is obtained by subtracting 40 rpm from the current indoor fan rotation speed Rfi.

In a case where the indoor heat exchange temperature Tc is lower than 53°C when the indoor heat exchange temperature Tc is not changed, the indoor fan rotation speed Rfi is reduced by 40 rpm every time the indoor heat exchange temperature Tc is detected (for example, every 30 seconds) . In a case where the indoor heat exchange temperature Tc is 53°C or higher and lower than 55°C, the indoor fan rotation speed Rfi is reduced by 30 rpm every time the indoor heat exchange temperature Tc is detected. Accordingly, the amount of air flowing to the indoor heat exchanger 31 decreases, and the indoor heat exchange temperature Tc becomes 55°C or higher quickly. Since "when Tc is maintained" is considered to be a state in which the indoor heat exchange temperature Tc hardly increases compared with "when Tc increases", a rotation speed to be reduced from the indoor fan rotation speed Rfi is increased such that the indoor fan rotation speed Rfi is lower than the indoor fan rotation speed Rfi "when Tc increases" even if the indoor heat exchange temperature Tc is the same.

In a case where the indoor heat exchange temperature Tc is 55°C or higher and lower than 57°C when the indoor heat exchange temperature Tc is not changed, the indoor fan rotation speed Rfi is not changed. Accordingly, the amount of air flowing to the indoor heat exchanger 31 is not changed, and the indoor heat exchange temperature Tc is maintained in a range of 55°C or higher and lower than 57°C. When the indoor heat exchange temperature Tc is 57°C or higher, the indoor heat exchange temperature Tc is prevented from being 59°C or higher by increasing the indoor fan rotation speed Rfi by 50 rpm to make the amount of air flowing to the indoor heat exchanger 31 increase. Since "when Tc is maintained" is considered to be a state in which the indoor heat exchange temperature Tc hardly increases compared with "when Tc increases", a rotation speed to be added to the indoor fan rotation speed Rfi is reduced such that the indoor fan rotation speed Rfi is lower than the indoor fan rotation speed Rfi "when Tc increases" even if the indoor heat exchange temperature Tc is the same.

In the indoor fan rotation speed Rfi "when Tc decreases", the current indoor fan rotation speed Rfi is not changed in a case where the indoor heat exchange temperature Tc is 57°C or higher and in a case where the indoor heat exchange temperature Tc is 55°C or higher and lower than 57°C. In a case where the indoor heat exchange temperature Tc is 53°C or higher and lower than 55°C, and in a case where the indoor heat exchange temperature Tc is lower than 53°C, a rotation speed is obtained by subtracting 40 rpm from the current indoor fan rotation speed Rfi.

In a case where the indoor heat exchange temperature Tc is lower than 53°C or in a case where the indoor heat exchange temperature Tc is 53°C or higher and lower than 55°C when the indoor heat exchange temperature Tc is decreasing, the indoor fan rotation speed Rfi is reduced by 40 rpm to make the amount of air flowing to the indoor heat exchanger 31 decrease every time the indoor heat exchange temperature Tc is detected (for example, every 30 seconds). Accordingly, the amount of air flowing to the indoor heat exchanger 31 is caused to decrease, and the indoor heat exchange temperature Tc is caused to become 55°C or higher quickly. Since "when Tc decreases" is considered to be a state in which the indoor heat exchange temperature Tc decreases, a rotation speed to be reduced from the indoor fan rotation speed Rfi is increased such that the indoor fan rotation speed Rfi is further lower than the indoor fan rotation speed Rfi "when Tc is maintained" even if the indoor heat exchange temperature Tc is the same.

In a case where the indoor heat exchange temperature Tc is 55°C or higher and lower than 57°C or in a case where the indoor heat exchange temperature Tc is 57°C or higher when the indoor heat exchange temperature Tc decreases, the indoor fan rotation speed Rfi is not changed. Accordingly, the amount of air flowing to the indoor heat exchanger 31 is not changed, and the indoor heat exchange temperature Tc is maintained in a range of 55°C or higher and lower than 57°C. Since "when Tc decreases" is considered to be a state in which the indoor heat exchange temperature Tc hardly increases compared with "when Tc is maintained", the indoor heat exchange temperature Tc is not 59°C or higher even if the indoor fan rotation speed Rfi is not changed in a case where the indoor heat exchange temperature Tc is 55°C or higher.

When the indoor fan control table 400 described above is used to increase or reduce the indoor fan rotation speed Rfi, the indoor fan rotation speed Rfi is increased or reduced between an upper limit rotation speed and a lower limit rotation speed of the indoor fan rotation speed Rfi (corresponding to the indoor fan minimum rotation speed Rfim described later). Here, the upper limit rotation speed is, for example, 900 rpm, and the lower limit rotation speed is, for example, 300 rpm. When the indoor fan rotation speed Rfi is increased by a rotation speed determined by using the indoor fan control table 400 and reaches 900 rpm, after that, the indoor fan rotation speed Rfi is maintained at 900 rpm even in a case where the indoor fan rotation speed Rfi is increased. When the indoor fan rotation speed Rfi is reduced by a rotation speed determined by using the indoor fan control table 400 and reaches 300 rpm, after that, the indoor fan rotation speed Rfi is maintained at 300 rpm even in a case where the indoor fan rotation speed Rfi is reduced.

In addition, 300 rpm of the lower limit rotation speed in the indoor heat exchange heating operation is a rotation speed lower than the lower limit rotation speed (for example, 420 rpm) of the indoor fan 32 in the heating operation. This is for increasing the indoor heat exchange temperature Tc quickly by reducing the rotation speed of the indoor fan 32 as much as possible to reduce the amount of air flowing to the indoor heat exchanger 31 in the indoor heat exchange heating operation.

### <Outdoor Fan Control Table>

First, an outdoor fan control table 500 shown in FIG. 6(B) will be described. The outdoor fan control table 500 is obtained by performing a test in advance and is stored in the storage unit 220 of the outdoor unit control means 200. In the outdoor fan control table 500, it is found that the discharge pressure of the compressor 21 can be prevented from exceeding the upper limit value of the use range by controlling the outdoor fan 27 based on the outdoor fan control table 500 when the indoor fan 32 is controlled based on the indoor fan control table 400 so as to maintain the indoor heat exchange temperature Tc at 55°C to 57°C in the indoor heat exchange heating operation.

In the outdoor fan control table 500, the rotation speed of the outdoor fan (Unit: rpm, hereinafter, described as outdoor fan rotation speed Rfo) is determined according to an outside air temperature detected by the outside air temperature sensor 73 (unit: °C, hereinafter, described as outside air temperature To) and an indoor temperature Ti (Unit: °C). Specifically, in a case where the outside air temperature To is 24°C or higher, the outdoor fan rotation speed Rfo is set to 0 rpm regardless of the indoor temperature Ti. In a case where the outside air temperature To is 16°C or higher and lower than 24°C, the outdoor fan rotation speed Rfo is 0 rpm when the indoor temperature Ti is 27°C or higher, and the outdoor fan rotation speed Rfo is 190 rpm when the indoor temperature Ti is lower than 27°C. In a case where the outside air temperature To is lower than 16°C, the outdoor fan rotation speed Rfo is controlled in the same manner as in the heating operation, that is, a rotation speed corresponding to the compressor rotation speed Rc.

The evaporation pressure in the outdoor heat exchanger 23 functioning as an evaporator in the indoor heat exchange heating operation is higher in a case where the outside air temperature To is 24°C or higher than in a case where the outside air temperature To is lower than 24°C. When the evaporation pressure becomes high, there is a possibility that the discharge pressure of the compressor 21 becomes high and exceeds the upper limit value of the use range since the condensing pressure in the indoor heat exchanger 31 functioning as a condenser also becomes high. Therefore, in a case where the outside air temperature To is 24°C or higher, the evaporation capacity in the outdoor heat exchanger 23 is reduced to prevent the evaporation pressure from increasing by making the outdoor fan rotation speed Rfo at 0 rpm regardless of the indoor temperature Ti, that is, stopping the rotation.

The condensation capacity in the indoor heat exchanger 31 functioning as a condenser decreases and the condensing pressure increases in a case where the outside air temperature To is 16°C or higher and lower than 24°C, and the indoor temperature Ti is 27°C or higher compared with in a case where the indoor temperature Ti is lower than 27°C. At this time, there is a possibility that the discharge pressure of the compressor 21 also increases and exceeds the upper limit value of the use range since the condensing pressure, which is originally high, further increases when the evaporation capacity in the outdoor heat exchanger 23 increases by driving the outdoor fan 27 and the evaporation pressure increases. Therefore, in a case where the outside air temperature To is 16°C or higher and lower than 24°C, and the indoor temperature Ti is 27°C or higher, the evaporation capacity in the outdoor heat exchanger 23 is reduced to prevent the evaporation pressure from increasing by making the outdoor fan rotation speed Rfo at 0 rpm, that is, stopping the rotation.

Even if the outdoor fan 27 is driven, the discharge pressure of the compressor 21 does not easily exceed the upper limit value of the use range since the condensing pressure is low in a case where the outside air temperature To is 16°C or higher and lower than 24°C, and the indoor temperature Ti is lower than 27°C compared with in a case where the indoor temperature Ti is 27°C or higher. Therefore, the outdoor fan rotation speed Rfo is driven at a rotation speed at which the discharge pressure of the compressor 21 does not exceed the upper limit value of the use range due to the increase in evaporation pressure, for example, at 190 rpm, which is the rotation speed in the present embodiment in a case where the outside air temperature To is 16°C or higher and lower than 24°C, and the indoor temperature Ti is lower than 27°C. Accordingly, the evaporation pressure in the outdoor heat exchanger 23 is increased while preventing the discharge pressure of the compressor 21 from increasing excessively, and the condensing temperature in the indoor heat exchanger 31, that is, the indoor heat exchange temperature Tc is rapidly increased.

In addition, 190 rpm which is the outdoor fan rotation speed Rfo in a case where the outside air temperature To is 16°C or higher and lower than 24°C and the indoor temperature Ti is lower than 27°C in the indoor heat exchange heating operation is a rotation speed lower than the lower limit rotation speed (for example, 500 rpm) of the outdoor fan 27 in the heating operation. This is in consideration of the fact that in the indoor heat exchange heating operation, the discharge pressure of the compressor 21 easily exceeds the upper limit value of the use range due to the indoor heat exchange temperature Tc being raised to a temperature higher than that in the heating operation and this is to reduce the amount of air flowing to the outdoor heat exchanger 23 functioning as an evaporator in the indoor heat exchange heating operation more than that in the heating operation, and prevent the discharge pressure of the compressor 21 from increasing excessively by suppressing an increase in the evaporation pressure in the outdoor heat exchanger 23.

The evaporation pressure in the outdoor heat exchanger 23 hardly increases even when the outdoor fan 27 is driven in a case where the outside air temperature To is lower than 16°C compared with in a case where the outside air temperature To is 16°C or higher. Therefore, in a case where the outside air temperature To is lower than 16°C, the outdoor fan rotation speed Rfo is controlled in the same manner as in the heating operation regardless of the indoor temperature Ti, that is, a rotation speed corresponding to the compressor rotation speed Rc. Accordingly, the evaporation pressure in the outdoor heat exchanger 23 is increased and the condensing temperature in the indoor heat exchanger 31, that is, the indoor heat exchange temperature Tc is rapidly increased.

### <Control of Indoor Heat Exchange Heating Operation>

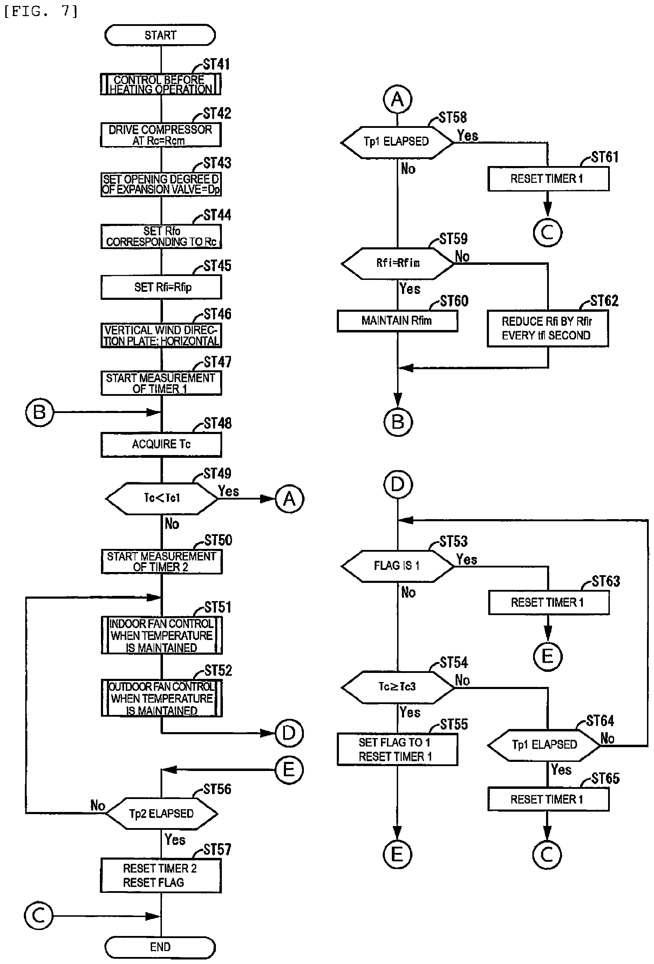

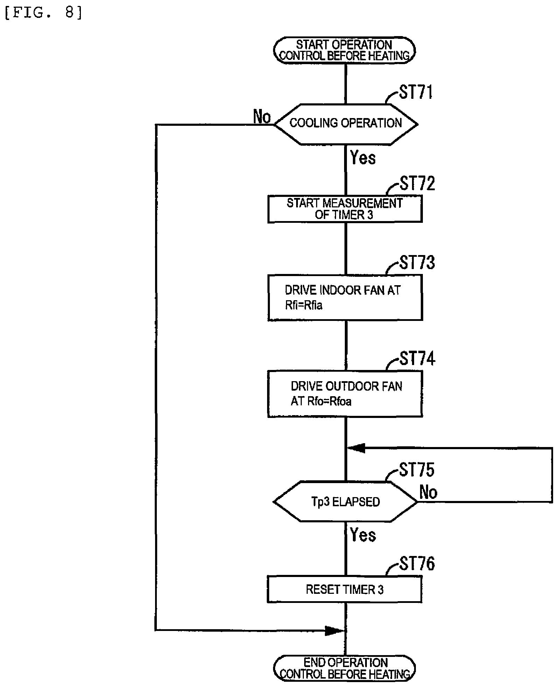

Next, a flow of a process in the indoor heat exchange heating operation will be described with reference to FIGs. 7 to 10. FIG. 7 is a main routine of a process performed by control means of the air conditioner 1 in the indoor heat exchange heating operation. FIG. 8 is a subroutine of a process performed by the control means in the indoor heat exchange heating operation, and illustrates a flow of a process in operation control before heating so as to suppress generation of dew condensation water in the inside of the indoor unit 3 before heating the indoor heat exchanger 31.

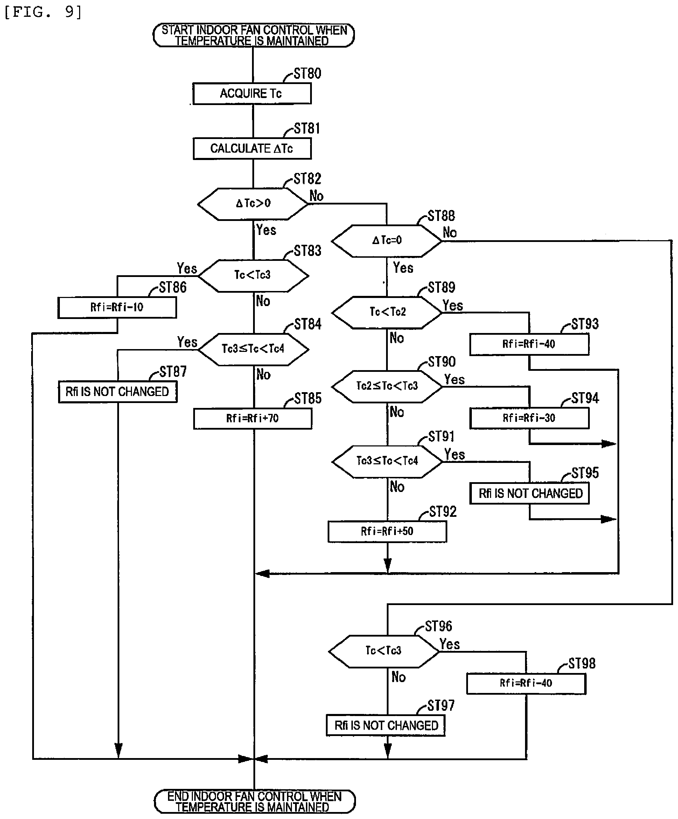

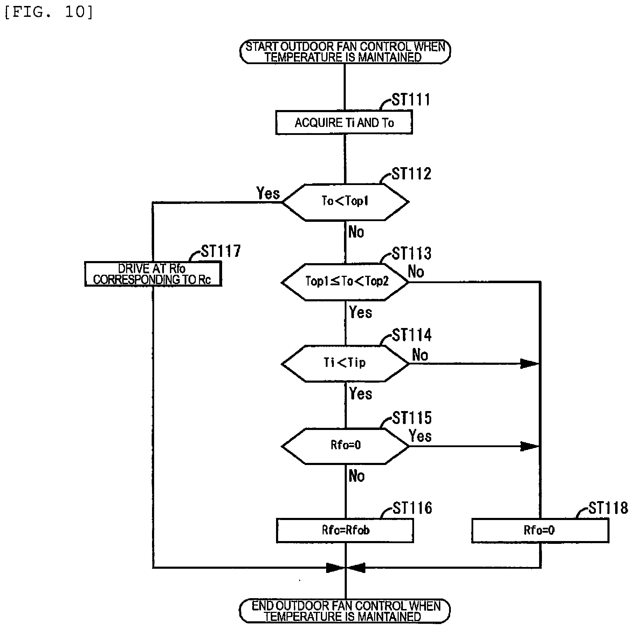

FIG. 9 is a subroutine of a process performed by control means in the indoor heat exchange heating operation, and illustrates a flow of a process in an indoor fan control when maintaining a temperature so as to maintain the indoor heat exchange temperature Tc in a range of 55°C to 57°C by using the indoor fan control table 400 shown in FIG. 6(A). FIG. 10 is a subroutine of a process performed by control means in the indoor heat exchange heating operation, and illustrates a flow of a process in an outdoor fan control when maintaining a temperature performed when the indoor heat exchange temperature Tc is maintained in a range of 55°C to 57°C by using the outdoor fan control table 500 shown in FIG. 6(B).

In each of the flowcharts of FIGs. 7 to 10, ST represents a step of s process, and the numbers following this represent a step number. In Tc1 to Tc4 (hereinafter, described as first indoor heat exchange temperature Tc1 to fourth indoor heat exchange temperature Tc4) shown in FIGs. 7 and 9, the second indoor heat exchange temperature Tc2 to the fourth indoor heat exchange temperature Tc4 correspond to the indoor heat exchange temperature Tc described in the indoor fan control table 400, the second indoor heat exchange temperature Tc2 is 53°C, the third indoor heat exchange temperature Tc3 is 55°C, and the fourth indoor heat exchange temperature Tc4 is 57°C. The first indoor heat exchange temperature Tc1 is a temperature at which a temperature maintaining operation described later is started, and is a temperature which is lower than the second indoor heat exchange temperature Tc2 by a predetermined temperature, for example, 50°C. The third indoor heat exchange temperature Tc3 is a first temperature of the present invention, the fourth indoor heat exchange temperature Tc4 is a second temperature of the present invention, and the first indoor heat exchange temperature Tc1 is a third temperature of the present invention.

### <Main Routine: Indoor Heat Exchange Heating Operation Control>

Next, a process in the indoor heat exchange heating operation will be described with reference to FIG. 7. When an instruction to perform the indoor heat exchange heating operation from the user is received or the air conditioner 1 ends the cooling operation, the control means first performs the operation control before heating which is a subroutine of the indoor heat exchange heating operation control (ST41) . The operation control before heating will be described later.

Next, the control means drives the compressor 21 at a predetermined minimum rotation speed (hereinafter, described as compressor minimum rotation speed Rcm) (ST42). Specifically, the CPU 210 of the outdoor unit control means 200 reads out the minimum compressor minimum rotation speed Rcm stored in advance in the storage unit 220, and drives the compressor 21 at the read compressor minimum rotation speed Rcm. Here, the compressor minimum rotation speed Rcm is obtained by performing a test or the like in advance, and the compressor minimum rotation speed Rcm is a rotation speed at which it is found that the discharge pressure of the compressor 21 does not exceed the upper limit value of the use range even in a situation where the indoor heat exchange temperature Tc is set to a temperature higher than that in the normal heating operation in the indoor heat exchange heating operation. The compressor minimum rotation speed Rcm is, for example, 30 rps.

Next, the control means sets the expansion valve 24 to a predetermined opening degree (hereinafter, described as predetermined expansion valve opening degree Dp) (ST43). Specifically, the CPU 210 of the outdoor unit control means 200 applies a driving pulse corresponding to the predetermined expansion valve opening degree Dp to a step motor (not shown) of the expansion valve 24 such that the predetermined expansion valve opening degree Dp stored in advance in the storage unit 220 is read out and the expansion valve opening degree D becomes the read out predetermined expansion valve opening degree Dp. Here, the predetermined expansion valve opening degree Dp is obtained by performing a test or the like in advance, and is an opening degree in which the refrigerant with the amount necessary to make the indoor heat exchange temperature Tc a temperature in a range of 55°C or higher and lower than 57°C only by controlling the indoor fan 32 can flow to the indoor heat exchanger 31 when the air conditioner 1 performs the indoor heat exchange heating operation of the present invention. The predetermined expansion valve opening degree Dp is, for example, 200 pulses when expressed by the number of driving pulses applied to the expansion valve 24.

Next, the control means sets the outdoor fan rotation speed Rfo to a rotation speed corresponding to the compressor rotation speed Rc (ST44) . Specifically, the CPU 210 drives the outdoor fan 27 at the outdoor fan rotation speed Rfo corresponding to the compressor rotation speed Rc. In addition, at the time of performing the process of ST43, since the outdoor fan 27 is already driven by the operation control before heating to be described later, in ST43, the outdoor fan rotation speed Rfo is changed to a rotation speed corresponding to the compressor rotation speed Rc, and the outdoor fan rotation speed Rfo at this time is, for example, 500 rpm.

Next, the control means sets the indoor fan 32 to a predetermined rotation speed (hereinafter, described as indoor fan initial rotation speed Rfip) (ST45) . Specifically, the CPU 310 of the indoor unit control means 300 reads out the indoor fan initial rotation speed Rfip stored in advance in the storage unit 320 and drives the indoor fan 32 by setting the indoor fan rotation speed Rfi as the read out indoor fan initial rotation speed Rfip. Here, the indoor fan initial rotation speed Rfip is obtained by performing a test or the like in advance, and is a rotation speed that can increase the indoor heat exchange temperature Tc as quickly as possible while preventing a protection stop by a protection control in the indoor heat exchange heating operation which will be described later when the indoor heat exchange temperature Tc increases rapidly due to the small amount of the indoor air supplied to the indoor heat exchanger 31 by the rotation of the indoor fan 32. The indoor fan initial rotation speed Rfip is, for example, 600 rpm. Further, at the time of performing the process of ST44, since the indoor fan 32 is already driven by the operation control before heating which will be described later, the indoor fan rotation speed Rfi is changed to the indoor fan initial rotation speed Rfip in ST44.

Next, the control means sets the vertical wind direction plate 35 in the horizontal position (ST46) . Specifically, the CPU 310 pivots the vertical wind direction plate 35 so as to be in the horizontal position. When the vertical wind direction plate 35 is in the horizontal position, some of the air which is warmed by the indoor heat exchanger 31 and blown from the blowing port 30g can be sucked into the suction port 30f. Therefore, the indoor heat exchange temperature Tc increases faster than that in a case where the vertical wind direction plate 35 is at a position other than the horizontal position.

Next, the control means starts measurement of a timer 1 (ST47). Specifically, the CPU 310 has a timer measurement function, and the CPU 310 starts the measurement of the timer 1. The timer measurement function may be provided in the CPU 210, or may be provided other than the CPU 210 and the CPU 310. Next, the control means acquires the indoor heat exchange temperature Tc (ST48). Specifically, the CPU 310 periodically (for example, every 30 seconds) acquires the indoor heat exchange temperature Tc detected by the indoor heat exchange temperature sensor 74 via the sensor input unit 340.

Next, the control means determines whether or not the indoor heat exchange temperature Tc acquired in ST48 is lower than the first indoor heat exchange temperature Tc1 (ST49). Specifically, the CPU 310 reads out the first indoor heat exchange temperature Tc1 from the storage unit 320 and compares the first indoor heat exchange temperature Tc1 with the acquired indoor heat exchange temperature Tc.

When the acquired indoor heat exchange temperature Tc is lower than the first indoor heat exchange temperature Tc1 (ST49-Yes), the control means determines whether or not a predetermined time (hereinafter, described as first predetermined time tp1) elapsed after the measurement of the timer 1 is started in ST47 (ST58) . Specifically, the CPU 310 determines whether or not the first predetermined time tp1 elapsed after the measurement of the timer 1 was started in ST47 . Here, the first predetermined time tp1 is predetermined and stored in the storage unit 320, and is, for example, 10 minutes.

When the first predetermined time tp1 elapsed (ST58-Yes), the control means resets the timer 1 (ST61) and ends a control of the indoor unit heat exchange heating operation. Specifically, the CPU 310 resets the timer 1 and stops the indoor fan 32, and transmits a signal, which includes an instruction to end the control of the indoor unit heat exchange heating operation, to the outdoor unit 2 via the communication unit 330. The CPU 210 that receives this signal via the communication unit 230 stops the compressor 21 and the outdoor fan 27.

When the first predetermined time tp1 has not elapsed (ST58-No), the control means determines whether or not the current indoor fan rotation speed Rfi is a predetermined minimum rotation speed (hereinafter, described as the indoor fan minimum rotation speed Rfim) (ST59) . Specifically, the CPU 310 reads out the indoor fan minimum rotation speed Rfim stored in advance in the storage unit 320, and compares the indoor fan minimum rotation speed Rfim with the current indoor fan rotation speed Rfi. Here, the indoor fan minimum rotation speed Rfim is the lower limit rotation speed of the use range of the indoor fan 32, and is, for example, 300 rpm.

When the current indoor fan rotation speed Rfi is the indoor fan minimum rotation speed Rfim (ST59-Yes), the control means maintains the indoor fan minimum rotation speed Rfim (ST60), that is, the control means continues to drive the indoor fan 32 at the indoor fan minimum rotation speed Rfim, and returns the process to ST48. Specifically, the CPU 310 continues to drive the indoor fan 32 at the indoor fan minimum rotation speed Rfim.

On the other hand, when the current indoor fan rotation speed Rfi is not the indoor fan minimum rotation speed Rfim (ST59-No), the control means reduces the indoor fan rotation speed Rfi by a predetermined indoor fan release rotation speed (hereinafter, described as indoor fan release rotation speed Rfir) every predetermined indoor fan release interval time (hereinafter, described as indoor fan release interval time tfi) (ST62), and returns the process to ST48. Specifically, the CPU 310 reduces the indoor fan rotation speed Rfi by the indoor fan release rotation speed Rfir every indoor fan release interval time tfi. The indoor fan release interval time tfi and the indoor fan release rotation speed Rfir are determined by performing a test or the like in advance, and it can be confirmed that the indoor heat exchange temperature Tc is increased while preventing a protection stop by a protection control in the indoor heat exchange heating operation which will be described later when the indoor heat exchange temperature Tc increases rapidly. The indoor fan release interval time tfi is, for example, 60 seconds, and the indoor fan release rotation speed Rfir is, for example, 50 rpm.

The processes of ST47 to ST49 and ST58 to ST62 described above are processes in an operation for increasing the indoor heat exchange temperature Tc in the indoor unit heat exchange heating operation to the first indoor heat exchange temperature Tc1 (hereinafter, described as temperature increasing operation). By performing the temperature increasing operation, the indoor heat exchange temperature Tc is increased to the first indoor temperature Tc1 as quickly as possible (50°C in the present embodiment) while preventing a protection stop by a protection control in the indoor heat exchange heating operation which will be described later.

In the process of ST58, in a case where the indoor heat exchange temperature Tc does not become equal to or higher than the first indoor heat exchange temperature Tc1 even when the first predetermined time tp1 elapsed, the indoor heat exchange heating operation is ended. The reason why the indoor heat exchange heating operation is ended is to avoid unnecessary operation as a result of continuing the indoor heat exchange heating operation as it is since the indoor heat exchange temperature Tc hardly increases for some reason when the indoor heat exchange temperature Tc does not become equal to or higher than the first indoor heat exchange temperature Tc1 even if the temperature increasing operation described above is performed for the first predetermined time tp1.

In ST49, when the acquired indoor heat exchange temperature Tc is not lower than the first indoor heat exchange temperature Tc1 (ST49-No), the control means starts the measurement of the timer 2 (ST50) . Specifically, the CPU 310 starts the measurement of the timer 2.

Next, the control means performs the indoor fan control when maintaining a temperature, which is a subroutine of the control of the indoor heat exchange heating operation (ST51), and performs the outdoor fan control when maintaining a temperature, which is a subroutine of the control of the indoor heat exchange heating operation (ST52) . The indoor fan control when maintaining a temperature and the outdoor fan control when maintaining a temperature will be described later.

Next, the control means determines whether or not the flag is 1 (ST53) . The flag is included, for example, by the CPU 310, and when the indoor heat exchange temperature Tc increases in the indoor heat exchange heating operation and becomes equal to or higher than the third indoor heat exchange temperature Tc3 for the first time (55°C in the present embodiment), the flag is changed from 0 to 1. The flag is 0 by default (in factory default).

When the flag is 1 (ST53-Yes), that is, when the indoor heat exchange temperature Tc already became the third indoor heat exchange temperature Tc3, the control means resets the timer 1 (ST63), and causes the process to proceed to ST56. Specifically, when the CPU 310 confirms the flag as 1, the CPU 310 resets the timer 1.

When the flag is not 1 (ST53-No), that is, when the indoor heat exchange temperature Tc has not yet become the third indoor heat exchange temperature Tc3, the control means determines whether or not the indoor heat exchange temperature Tc acquired in ST48 is equal to or higher than the third indoor heat exchange temperature Tc3 (ST54). Specifically, the CPU 310 reads out the third indoor heat exchange temperature Tc3 from the storage unit 320, and compares the third indoor heat exchange temperature Tc3 with the acquired indoor heat exchange temperature Tc.

When the acquired indoor heat exchange temperature Tc is equal to higher than the third indoor heat exchange temperature Tc3 (ST54-Yes), the control means sets the flag to 1 and resets the timer 1 (ST55), and causes the process to proceed to ST56. Specifically, the CPU 310 sets the flag to 1 and resets the timer 1.

When the acquired indoor heat exchange temperature Tc is not equal to or higher than the third indoor heat exchange temperature Tc3 (ST54-No), the control means determines whether or not the first predetermined time tp1 elapsed after the measurement of the timer 1 is started in ST47 (ST64). The process of ST63 is performed by the CPU 310 in the same manner as the process of ST58.

When the first predetermined time tp1 elapsed (ST64-Yes), the control means resets the timer 1 (ST65) and ends a control of the indoor unit heat exchange heating operation. The process of ST65 is performed by the CPU 310 in the same manner as the process of ST61. When the first predetermined time tp1 has not elapsed (ST64-No), the control means returns the process to ST53.

In the process of ST64, in a case where the indoor heat exchange temperature Tc does not become equal to or higher than the third indoor heat exchange temperature Tc3 even when the first predetermined time tp1 elapsed, the indoor heat exchange heating operation is ended. The reason why the indoor heat exchange heating operation is ended is to avoid an unnecessary operation as a result of continuing the indoor heat exchange heating operation as it is since the indoor heat exchange temperature Tc hardly increases for some reason when the indoor heat exchange temperature Tc does not become equal to or higher than the third indoor heat exchange temperature Tc3 even if the temperature increasing operation described above and a temperature maintaining operation which will be described later is performed for the first predetermined time tp1.

The control means which ended the process of ST55 determines whether or not a predetermined time (hereinafter, described as second predetermined time tp2) elapsed after the measurement of the timer 2 is started in ST50 (ST56). Specifically, the CPU 310 determines whether or not the second predetermined time tp2 elapsed after the measurement of the timer 2 was started in ST50. Here, the second predetermined time tp2 is predetermined and stored in the storage unit 320. The second predetermined time tp2 is a time to maintain the indoor heat exchange temperature Tc at 55°C or higher, for example, 10 minutes in order to significantly reduce the number of fungi and bacteria existing in the indoor heat exchanger 31 described above.

When the second predetermined time tp2 has not elapsed (ST56-No), the control means returns the process to ST51. When the second predetermined time tp2 elapsed (ST56-Yes), the control means resets the timer 2 and the flag (ST57), and ends a control of the indoor unit heat exchange heating operation. Specifically, the CPU 310 resets the timer 2 and the flag. Specifically, the CPU 310 stops the indoor fan 32, and transmits a signal, which includes an instruction to end the control of the indoor unit heat exchange heating operation, to the outdoor unit 2 via the communication unit 330. The CPU 210 that receives this signal via the communication unit 230 stops the compressor 21 and the outdoor fan 27.

The processes of ST50 to ST56 and ST63 to ST65 described above are processes for an operation to maintain the indoor heat exchange temperature Tc at the third indoor heat exchange temperature Tc3 (55°C in the present embodiment) or higher for the second predetermined time tp2 (hereinafter, described as temperature maintaining operation). By continuing the temperature maintaining operation for the second predetermined time tp2, the number of fungi and bacteria existing in the indoor heat exchanger 31 can be significantly reduced as compared with a case of the drying operation in the related art in which the indoor heat exchange temperature Tc is about 40°C.

### <Subroutine: Operation Control before Heating>

Next, an operation control before heating which is a subroutine of a control of the indoor heat exchange heating operation will be described with reference to FIG. 8. In the operation control before heating, the compressor 21 is stopped, and the refrigerant does not circulate in the refrigerant circuit 10.

First, the control means determines whether or not the cooling operation is performed before the indoor heat exchange heating operation (ST71). When the cooling operation is not performed (ST71-No), the control means ends the operation control before heating. When the cooling operation is performed (ST71-Yes), the control means starts the measurement of the timer 3 (ST72). Specifically, the CPU 310 starts the measurement of the timer 3.

Next, the control means sets the indoor fan rotation speed Rfi to a predetermined rotation speed (hereinafter, described as indoor fan rotation speed before heating Rfia) and drives the indoor fan 32 (ST73) . Specifically, the CPU 310 sets the indoor fan rotation speed Rfi to the indoor fan rotation speed before heating Rfia and drives the indoor fan 32. Here, the indoor fan rotation speed before heating Rfia is determined by performing a test or the like in advance, and is a rotation speed which can suppress generation of the dew condensation water resulting from a temperature difference of the temperature of the indoor unit 3 and the indoor heat exchange temperature Tc in the temperature increasing operation by allowing the indoor air to pass through the inside of the indoor unit 3 for a third predetermined time tp3 which will be described later to warm the indoor unit 3 cooled in the cooling operation. The indoor fan rotation speed before heating Rfia is, for example, 900 rpm.

Next, the control means sets the outdoor fan rotation speed Rfo to a predetermined rotation speed (hereinafter, described as outdoor fan rotation speed before heating Rfoa) and drives the outdoor fan 27 (ST74). Specifically, the CPU 210 sets the outdoor fan rotation speed Rfo to the outdoor fan rotation speed before heating Rfoa and drives the outdoor fan 27. Here, the outdoor fan rotation speed before heating Rfoa is obtained by performing a test or the like in advance, and is a rotation speed which can suppress over-temperature of the outdoor unit control means 200 when the indoor heat exchange heating operation is performed by cooling the outdoor unit control means 200 which generates heat in the cooling operation (in particular, an inverter unit (not shown) driving the compressor 21) for a third predetermined time tp3 which will be described later. The outdoor fan rotation speed before heating Rfoa is, for example, 650 rpm.

Next, the control means determines whether or not a predetermined time (hereinafter, described as third predetermined time tp3) elapsed after the measurement of the timer 3 is started in ST72 (ST75) . Specifically, the CPU 310 determines whether or not the third predetermined time tp3 elapsed after the measurement of the timer 3 was started in ST75 . Here, the third predetermined time tp3 is predetermined and stored in the storage unit 320. The third predetermined time tp3 is time when the indoor unit 3 cooled during the cooling operation can be warmed to an extent that the dew condensation water is not generated in the temperature increasing operation, and the outdoor unit control means 200 which generates heat in the cooling operation can be cooled when the indoor fan rotation speed Rfi is set to the indoor fan rotation speed before heating Rfia and the outdoor fan rotation speed Rfo is set to the outdoor fan rotation speed before heating Rfoa to be driven for the third predetermined time tp3. The third predetermined time tp3 is, for example, 15 minutes.

When the third predetermined time tp3 has not elapsed (ST75-No), the control means returns the process to ST75. When the third predetermined time tp3 elapsed (ST75-Yes), the control means resets the timer 3 (ST76) and ends an operation control before heating to return to a main routine.

As described above, when the cooling operation is performed before the indoor heat exchange heating operation, the housing 30 of the indoor unit 3 cooled in the cooling operation can be warmed by performing the operation control before heating prior to the temperature increasing operation. Accordingly, since it is possible to suppress the generation of the dew condensation water in the housing 30 due to the temperature difference between the temperature of the indoor unit 3 and the indoor heat exchange temperature Tc in the temperature increasing operation, the dew condensation water is prevented from scattering from the blowing port 30g of the indoor unit 3 into the room when the indoor heat exchange heating operation is performed. Further, by driving the outdoor fan 27 by the operation control before heating, it is possible to cool the outdoor unit control means 200 having a high temperature in the cooling operation in which the outside air temperature is high.

### <Subroutine: Indoor Fan Control when Maintaining Temperature>

Next, an indoor fan control when maintaining a temperature which is a subroutine of a control of the indoor heat exchange heating operation will be described with reference to FIG. 9. Since the drive control of the indoor fan 32 is performed only by the indoor unit control means 300, in the following description, the description of the control will be made mainly by using the CPU 310 of the indoor unit control means 300.

Next, the CPU 310 acquires the indoor heat exchange temperature Tc (ST80). Since the indoor heat exchange temperature Tc is acquired in the same method as ST11 in the protection control in the heating operation, which is described in FIG. 4, description will be omitted. Next, the CPU 310 uses two indoor heat exchange temperatures Tc acquired by intervals, and calculates a temperature difference (hereinafter, described as an indoor heat exchange temperature difference ΔTc) obtained by subtracting the indoor heat exchange temperature Tc acquired immediately before (for example, 30 seconds before) from the indoor heat exchange temperature Tc acquired most recently (ST81).

Next, the CPU 310 determines whether or not the indoor heat exchange temperature difference ΔTc calculated in ST81 is more than 0, that is, whether or not the indoor heat exchange temperature Tc is increasing (ST82). When the indoor heat exchange temperature difference ΔTc is more than 0 (ST82-Yes), the CPU 310 refers to "when Tc increases" of the indoor fan control table 400 of FIG. 6 stored in the storage unit 320, and the processes of ST83 to ST85 below are performed.

First, the CPU 310 determines whether or not the current indoor heat exchange temperature Tc is lower than the third indoor heat exchange temperature Tc3 (ST83) . When the current indoor heat exchange temperature Tc is lower than the third indoor heat exchange temperature Tc3 (ST83-Yes), the CPU 310 sets the indoor fan rotation speed Rfi to a rotation speed obtained by subtracting 10 rpm from the current indoor fan rotation speed Rfi (ST86), and ends the indoor fan control when maintaining a temperature to return to the main routine.

When the current indoor heat exchange temperature Tc is not lower than the third indoor heat exchange temperature Tc3 (ST83-No), the CPU 310 determines whether or not the current indoor heat exchange temperature Tc is equal to or higher than the third indoor heat exchange temperature Tc3 and lower than the fourth indoor heat exchange temperature Tc4 (ST84). When the current indoor heat exchange temperature Tc is equal to or higher than the third indoor heat exchange temperature Tc3 and lower than the fourth indoor heat exchange temperature Tc4 (ST84-Yes), the CPU 310 does not change the indoor fan rotation speed Rfi (ST87), and ends the indoor fan control when maintaining a temperature to return to the main routine.

When the current indoor heat exchange temperature Tc is equal to or higher than the third indoor heat exchange temperature Tc3 and lower than the fourth indoor heat exchange temperature Tc4 (ST84-No), that is, when the current indoor heat exchange temperature Tc is equal to or higher than the fourth indoor heat exchange temperature Tc4, the CPU 310 sets the indoor fan rotation speed Rfi to a rotational speed obtained by adding 70 rpm to the current indoor fan rotation speed Rfi (ST85), and ends the indoor fan control when maintaining a temperature to return to the main routine.

In ST82, when the indoor heat exchange temperature difference ΔTc is not more than 0 (ST82-No), the CPU 310 determines whether or not the indoor heat exchange temperature difference ΔTc calculated in ST81 is 0, that is, whether or not the indoor heat exchange temperature Tc is changed (ST88) . When the indoor heat exchange temperature difference ΔTc is 0 (ST88-Yes), the CPU 310 executes the processes of ST89 to ST95 below by referring to "when Tc is maintained" of the indoor fan control table 400 of FIG. 6 stored in the storage unit 320.

First, the CPU 310 determines whether or not the current indoor heat exchange temperature Tc is lower than the second indoor heat exchange temperature Tc2 (ST89) . When the current indoor heat exchange temperature Tc is lower than the second indoor heat exchange temperature Tc2 (ST89-Yes), the CPU 310 sets the indoor fan rotation speed Rfi to a rotation speed obtained by subtracting 40 rpm from the current indoor fan rotation speed Rfi (ST93), and ends the indoor fan control when maintaining a temperature to return to the main routine.

When the current indoor heat exchange temperature Tc is not lower than the second indoor heat exchange temperature Tc2 (ST89-No), the CPU 310 determines whether or not the current indoor heat exchange temperature Tc is equal to or higher than the second indoor heat exchange temperature Tc2 and lower than the third indoor heat exchange temperature Tc3 (ST90). When the current indoor heat exchange temperature Tc is equal to or higher than the second indoor heat exchange temperature Tc2 and lower than the third indoor heat exchange temperature Tc3 (ST90-Yes), the CPU 310 sets the indoor fan rotation speed Rfi to a rotation speed obtained by subtracting 30 rpm from the current indoor fan rotation speed Rfi (ST94), and ends the indoor fan control when maintaining a temperature to return to the main routine.

When the current indoor heat exchange temperature Tc is not equal to or higher than the second indoor heat exchange temperature Tc2 and lower than the third indoor heat exchange temperature Tc3 (ST90-No), the CPU 310 determines whether or not the current indoor heat exchange temperature Tc is equal to or higher than the third indoor heat exchange temperature Tc3 and lower than the fourth indoor heat exchange temperature Tc4 (ST91) . When the current indoor heat exchange temperature Tc is equal to or higher than the third indoor heat exchange temperature Tc3 and lower than the fourth indoor heat exchange temperature Tc4 (ST91-Yes), the CPU 310 does not change the indoor fan rotation speed Rfi (ST95), and ends the indoor fan control when maintaining a temperature to return to the main routine.

When the current indoor heat exchange temperature Tc is equal to or higher than the third indoor heat exchange temperature Tc3 and lower than the fourth indoor heat exchange temperature Tc4 (ST93-No), that is, when the current indoor heat exchange temperature Tc is equal to or higher than the fourth indoor heat exchange temperature Tc4, the CPU 310 sets the indoor fan rotation speed Rfi to a rotational speed obtained by adding 50 rpm to the current indoor fan rotation speed Rfi (ST98), and ends the indoor fan control when maintaining a temperature to return to the main routine.

In ST88, when the indoor heat exchange temperature difference ΔTc is not 0 (ST88-No), that is, when the indoor heat exchange temperature Tc decreases, the CPU 310 executes the processes of ST96 to ST98 below by referring to "when Tc decreases" of the indoor fan control table 400 of FIG. 6 stored in the storage unit 320.

First, the CPU 310 determines whether or not the current indoor heat exchange temperature Tc is lower than the third indoor heat exchange temperature Tc3 (ST96) . When the current indoor heat exchange temperature Tc is lower than the third indoor heat exchange temperature Tc3 (ST96-Yes), the CPU 310 sets the indoor fan rotation speed Rfi to a rotation speed obtained by subtracting 40 rpm from the current indoor fan rotation speed Rfi (ST98), and ends the indoor fan control when maintaining a temperature to return to the main routine.

When the current indoor heat exchange temperature Tc is lower than the third indoor heat exchange temperature Tc3 (ST96-No), that is, when the current indoor heat exchange temperature Tc is equal to or higher than the third indoor heat exchange temperature Tc3, the CPU 310 does not change the indoor fan rotation speed Rfi (ST97), and ends the indoor fan control when maintaining a temperature to return to the main routine.

As described above, when the indoor fan control when maintaining a temperature is performed by using the indoor fan control table 400, the indoor fan rotation speed Rfi is set between the upper limit rotation speed and the lower limit rotation speed (900 rpm and 300 rpm) of the indoor fan rotation speed Rfi. When the indoor fan rotation speed Rfi is increased by a rotation speed determined by using the indoor fan control table 400 and reaches 900 rpm, after that, the indoor fan rotation speed Rfi is maintained at 900 rpm even in a case where the indoor fan rotation speed Rfi is increased. When the indoor fan rotation speed Rfi is reduced by a rotation speed determined by using the indoor fan control table 400 and reaches 300 rpm, after that, the indoor fan rotation speed Rfi is maintained at 300 rpm even in a case where the indoor fan rotation speed Rfi is reduced.

As described above, in the temperature maintaining operation performed in the indoor heat exchange heating operation, the indoor heat exchange temperature Tc can be maintained between at the third indoor heat exchange temperature Tc3 (=55°C) and at the fourth indoor heat exchange temperature Tc4 (=57°C) for 10 minutes by performing the indoor fan control when maintaining a temperature by using the indoor fan control table 400.

### <Subroutine: Outdoor Fan Control when Maintaining Temperature>

Next, an outdoor fan control when maintaining a temperature which is a subroutine of a control of the indoor heat exchange heating operation will be described. Since the drive control of the outdoor fan 27 is performed only by the outdoor unit control means 200, in the following description, the description of the control will be made mainly by using the CPU 210 of the outdoor unit control means 200.

First, the CPU 210 acquires the indoor temperature Ti from the indoor unit 3 via the communication unit 230, and acquires the outside air temperature To detected by the outside air temperature sensor 73 via the sensor input unit 240 (ST111). The CPU 210 acquires the indoor temperature Ti and the outside air temperature To periodically (for example, every 30 seconds).

Next, the CPU 210 determines whether or not the outside air temperature To acquired in ST111 is lower than a predetermined first outside air temperature (hereinafter, described as first threshold outside air temperature Top1) (ST112). For example, the first threshold outside air temperature Top1 is 16°C, which is the outside air temperature defined in the outdoor fan control table 500 of FIG. 6(B).

When the acquired outside air temperature To is lower than the first threshold outside air temperature Top1 (ST112-Yes), the CPU 210 drives the outdoor fan 27 at the outdoor fan rotation speed Rfo corresponding to the compressor rotation speed Rc (ST117), and ends the outdoor fan control when maintaining a temperature to return to the main routine by referring to the outdoor fan control table 500 stored in the storage unit 220.

When the acquired outside air temperature To is not lower than the first threshold outside air temperature Top1 (ST112-No), the CPU 210 determines whether or not the acquired outside air temperature To is equal to or higher than the first threshold outside air temperature Top1 and lower than a predetermined second outside air temperature (hereinafter, described as second threshold outside air temperature Top2)

### (ST113). The second threshold outside air temperature Top2 is a temperature higher than the first threshold outside air temperature Top1, for example, 24°C, which is the outside air temperature defined in the outdoor fan control table 500 of FIG. 6(B).

When the acquired outside air temperature To is not equal to or higher than the first threshold outside air temperature Top1 and lower than the second threshold outside air temperature Top2 (ST113-No), that is, when the acquired outside air temperature To is equal to or higher than the second threshold outside air temperature Top2, the CPU 210 sets the outdoor fan rotation speed Rfo to 0 rpm (ST118), that is, the CPU 210 stops the outdoor fan 27, and ends the outdoor fan control when maintaining a temperature to return to the main routine by referring to the outdoor fan control table 500 stored in the storage unit 220.

When the acquired outside air temperature To is equal to or higher than the first threshold outside air temperature Top1 and lower than the second threshold outside air temperature Top2 (ST113-Yes), the CPU 210 determines whether or not the indoor temperature Ti acquired in ST111 is lower than a predetermined indoor temperature (hereinafter, described as threshold indoor temperature Tip) (ST114). For example, the threshold indoor temperature Tip is 27°C, which is the indoor temperature defined in the outdoor fan control table 500 of FIG. 6(B).

When the acquired indoor temperature Ti is not lower than the threshold indoor temperature Tip (ST114-No), that is, when the acquired indoor temperature Ti is equal to or higher than the threshold indoor temperature Tip, the CPU 210 causes the process to proceed to ST118. When the acquired indoor temperature Ti is lower than the threshold indoor temperature Tip (ST114-Yes), the CPU 210 determines whether or not the current outdoor fan rotation speed Rfo is 0 rpm (ST115).

When the current outdoor fan rotation speed Rfo is 0 rpm (ST115-Yes), the CPU 210 causes the process to proceed to ST118, that is, maintains the state in which the outdoor fan 27 is stopped. When the current outdoor fan rotation speed Rfo is not 0 rpm (ST115-No), the CPU 210 sets the outdoor fan rotation speed Rfo to a predetermined rotation speed (hereinafter, described as outdoor fan rotation speed Rfob when maintaining) (ST116), and ends the outdoor fan control when maintaining a temperature to return to the main routine. For example, the outdoor fan rotation speed Rfob when maintaining is 190 rpm which is the outdoor fan rotation speed Rfo defined in the outdoor fan control table 500 of FIG. 6(B).

As described above, in the temperature maintaining operation performed in the indoor heat exchange heating operation, the outdoor fan control when maintaining a temperature is performed by using the outdoor fan control table 500. Accordingly, when the indoor heat exchange temperature Tc is maintained in a range of 55°C to 57°C by controlling the outdoor fan 27 based on the outdoor fan control table 500, the discharge pressure of the compressor 21 can be prevented from exceeding the upper limit value of the use range.

As described in the process of ST115, in the outdoor fan control when maintaining a temperature, once the outdoor fan 27 is stopped, after that, the outdoor fan 27 is not driven until the indoor heat exchange heating operation is ended. The reason for this is to prevent the discharge pressure of compressor 21 form increasing to exceed the upper limit value of the use range since the evaporation capacity in the outdoor heat exchanger 23 is increased and the evaporation pressure is increased due to the restart of the outdoor fan 27 when the indoor heat exchange temperature Tc is maintained at 55°C or higher.

### <Protection Control in Indoor Heat Exchange Heating Operation>

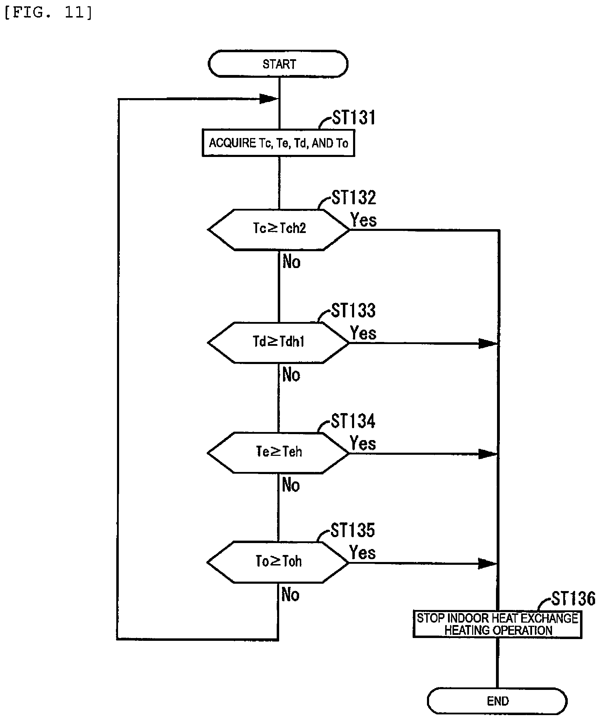

Next, a protection control in the indoor heat exchange heating operation, which prevents the discharge pressure of the compressor 21 from exceeding an upper limit value of the use range when the indoor heat exchange heating operation described above is performed, will be described with reference to FIG. 11. In FIG. 11, ST represents a step of a process, and the numbers following this represent a step number. The protection control in the indoor heat exchange heating operation is performed when the indoor heat exchange heating operation is performed, and is different from the protection control in the heating operation, which is performed when the heating operation is performed.

First, the control means acquires the indoor heat exchange temperature Tc, the discharge temperature Td, the temperature of the outdoor heat exchanger 23 (hereinafter, described as outdoor heat exchange temperature Te), and the outside air temperature To (ST131). Among these, since the indoor heat exchange temperature Tc and the discharge temperature Td are acquired in the same method as ST11 in the protection control in the heating operation, which is described in FIG. 4, description will be omitted. Since the outside air temperature To is acquired in the same method as ST111 in the outdoor fan control when maintaining a temperature, which is described in FIG. 10, description will be omitted. With respect to the outdoor heat exchange temperature Te, the CPU 210 periodically (for example, every 30 seconds) acquires the outdoor heat exchange temperature Te detected by the outdoor heat exchange temperature sensor 72 via the sensor input unit 240.

Next, the control means determines whether or not the indoor heat exchange temperature Tc acquired in ST131 is equal to or higher than a predetermined temperature which is a temperature higher than the first threshold indoor heat exchange temperature Tch1 (hereinafter, described as second threshold indoor heat exchange temperature Tch2) (ST132). Specifically, the CPU 310 reads out the second threshold indoor heat exchange temperature Tch2 stored in advance in the storage unit 320 and compares the second threshold indoor heat exchange temperature Tch2 with the indoor heat exchange temperature Tc. The second threshold indoor heat exchange temperature Tch2 is obtained by performing a test or the like in advance. The second threshold indoor heat exchange temperature Tch2 is higher than the first threshold indoor heat exchange temperature Tchl, and is a temperature which is lower than the indoor heat exchange temperature Tc corresponding to the upper limit value of the use range of the discharge pressure of the compressor 21 described above by a predetermined temperature. The second threshold indoor heat exchange temperature Tch2 is, for example, 59°C.

When the indoor heat exchange temperature Tc is equal to or higher than the second threshold indoor heat exchange temperature Tch2 (ST132-Yes), the control means stops the indoor heat exchange heating operation (ST136), and ends the process of the protection control in the indoor heat exchange heating operation. The operation of the air conditioner 1 may be stopped after performing the process of ST136. In addition, the compressor 21 may be stopped and a blowing operation continuing to drive only the indoor fan 32 may be performed. Alternatively, the compressor 21 may be driven at a predetermined rotation speed. The drying operation of the indoor heat exchanger 31 may be continued for a certain period of time by making the opening degree D of the expansion valve 24 higher than the predetermined expansion valve opening degree Dp in the indoor heat exchange heating operation and driving the indoor fan 32 at the indoor fan rotation speed Rfi higher than that in the indoor heat exchange heating operation. In the drying operation, the discharge pressure of the compressor 21 is reduced more than that in the indoor heat exchange heating operation since the opening degree D of the expansion valve 24 is made larger than that in the indoor heat exchange heating operation and the indoor fan rotation speed Rfi is also increased.

When the indoor heat exchange temperature Tc is not equal to or higher than the second threshold indoor heat exchange temperature Tch2 (ST132-No), the control means determines whether or not the discharge temperature Td acquired in ST131 is equal to or higher than the first threshold discharge temperature Tdh1 (ST133). Specifically, the CPU 210 determines whether or not the discharge temperature Td is equal to or higher than the first threshold discharge temperature Tdh1.

When the acquired discharge temperature Td is equal to or higher than the first threshold discharge temperature Tdh1 (ST133-Yes), the control means causes the process to proceed to ST136.

When the acquired discharge temperature Td is not equal to or higher than the first threshold discharge temperature Tdh1 (ST133-No), the control means determines whether or not the outdoor heat exchange temperature Te acquired in ST131 is equal to or higher than a predetermined outdoor heat exchange temperature (hereinafter, described as threshold outdoor heat exchange temperature Teh) (ST134). Specifically, the CPU 210 determines whether or not the acquired outdoor heat exchange temperature Te is equal to or higher than the threshold outdoor heat exchange temperature Teh. Here, the threshold outdoor heat exchange temperature Teh is obtained by performing a test in advance and stored in the storage unit 220. When the outdoor heat exchange temperature Te is equal to or higher than the threshold outdoor heat exchange temperature Teh, the threshold outdoor heat exchange temperature Teh is a temperature at which there is a possibility that the suction pressure of the compressor 21 increases and the compression ratio (ratio of discharge pressure to suction pressure) of the compressor 21 falls below the lower limit value of the use range.

When the acquired outdoor heat exchange temperature Te is equal to or higher than the threshold outdoor heat exchange temperature Teh (ST134-Yes), the control means causes the process to proceed to ST136.

When the acquired outdoor heat exchange temperature Te is not equal to or higher than the threshold outdoor heat exchange temperature Teh (ST134-No), the control means determines whether or not the outside air temperature To acquired in ST131 is equal to or higher than a predetermined outside air temperature (Hereafter, described as third threshold outside air temperature Top 3) (ST135). Specifically, the CPU 310 determines whether or not the acquired outside air temperature To is equal to or higher than the third threshold outside air temperature Top3. Here, the third threshold outside air temperature Top3 is obtained by performing a test in advance and is stored in the storage unit 220. If the indoor heat exchange heating operation is performed when the outside air temperature To is equal to or higher than the third threshold outside air temperature Top3, the third threshold outside air temperature Top3 is a temperature at which there is a possibility that the discharge pressure of the compressor 21 excessively increases and exceeds the lower limit value of the use range of the discharge pressure of the compressor 21. The third threshold outside air temperature Top3 is a temperature which is higher than the first threshold outside air temperature Top1 and the second threshold outside air temperature Top2 described above, for example, 43°C.

When the acquired outside air temperature To is not equal to or higher than the third threshold outside air temperature Top3 (ST134-No), the control means returns the process to ST131. When the acquired outside air temperature To is equal to or higher than the third threshold outside air temperature Top3 (ST134-Yes), the control means returns the process to ST136.

As described above, in the protection control in the indoor heat exchange heating operation, the compressor 21 is not stopped until the indoor heat exchange temperature Tc becomes equal to or higher than the second threshold indoor heat exchange temperature Tch2 (=59°C) higher than the first threshold indoor heat exchange temperature Tch1 (=55°C) in the protection control in the heating operation. Accordingly, the discharge pressure of the compressor 21 can be prevented from exceeding the upper limit value of the use range since the indoor heat exchange temperature Tc can be maintained at 55°C to 57°C in the outdoor heat exchange heating operation, and the compressor 21 is stopped when the indoor heat exchange temperature Tc is equal to or higher than the second threshold indoor heat exchange temperature Tch2.

Further, in the protection control in the indoor heat exchange heating operation, the compressor 21 is stopped when the discharge temperature Td of the compressor 21 is equal to or higher than the first threshold discharge temperature Tdh1 (=105°C) which is a temperature lower than the second threshold discharge temperature Tdh2 (=115°C), the second threshold discharge temperature Tdh2 being a threshold temperature at which the compressor 21 is stopped in the protection control in the heating operation. When the indoor heat exchange temperature Tc is maintained at 55°C to 57°C in the indoor heat exchange heating operation, the discharge temperature Td of the compressor 21 easily increases, and the discharge pressure also easily increases. Therefore, when the discharge temperature Td is equal to or higher than the first threshold discharge temperature Tdh1 lower than the second threshold discharge temperature Tdh2, the discharge pressure of the compressor 21 can be prevented from exceeding the upper limit value of the use range effectively by stopping the compressor 21.

Furthermore, in the protection control in the indoor heat exchange heating operation, the stop of the compressor 21 at the outdoor heat exchange temperature Te which is not included in the protection control in the heating operation. It is considered that the indoor heat exchange heating operation of the present invention is often performed in summer when the cooling operation, in which the possibility of the growth of fungus and bacteria due to the condensed water generated in the indoor heat exchanger 31 is high, is performed. In summer, the outside air temperature To is high, and the outdoor heat exchange temperature Te of the outdoor heat exchanger 23 functioning as an evaporator is high in the indoor heat exchange heating operation due to the high outside air temperature To. In this case, the suction pressure of the compressor 21 may increase due to the increase in the outdoor heat exchange temperature Te. Accordingly, in the protection control of the indoor heat exchange heating operation, when the outdoor heat exchange temperature Te is equal to or higher than the threshold outdoor heat exchange temperature Teh, the compression ratio of the compressor 21 can be prevented from falling below the lower limit value of the use range by stopping the compressor 21 to prevent the suction pressure of the compressor 21 from increasing.

### <Regarding Wet Control Operation>

In the present invention, prior to the above described indoor heat exchange heating operation, the wet control operation may be performed as follows. In the wet control operation, the indoor heat exchange temperature is controlled so as to wet a surface of the indoor heat exchanger 31 with a specific water amount of the dew condensation water based on the temperature and humidity of the indoor heat exchanger 31 after the cooling operation. As described above, if the indoor heat exchange temperature is maintained at a high temperature in the state where the dew condensation water is present on the surface of the indoor heat exchanger 31, the survival rate of fungi and bacteria existing on the surface of the indoor heat exchanger 31 can be significantly reduced. Here, in the indoor unit 3, an information signal including humidity information of the measured humidity is supplied to the sensor input unit 340 of the indoor unit control means 300 from an indoor humidity sensor (not shown) that measures relative humidity in the indoor unit 3.

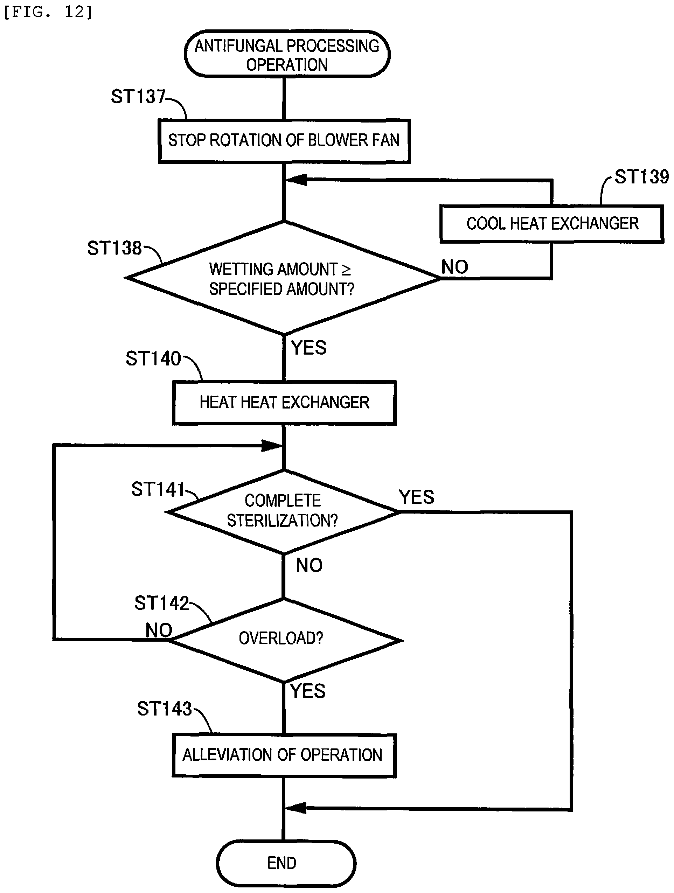

As shown in FIG. 12, when the end of the cooling operation is recognized, the control means stops the rotation of the indoor fan 32 in ST137. The stationary state of the indoor fan 32 prevents the dew condensation water from evaporating from the surface of the indoor heat exchanger 31. At this time, a position of the four-way valve 22 in the cooling operation is maintained. In ST137, the control means may reduce the rotation speed of the indoor fan 32 and perform the intermittent rotation in addition to stopping the rotation of the indoor fan 32. The rotation of the indoor fan 32 may be appropriately adjusted according to the water amount of the dew condensation water.

In ST138, the control means specifies the wetting amount of the indoor heat exchanger 31 from the water amount of the dew condensation water generated on the surface of the indoor heat exchanger 31. The control means estimates the saturated water vapor amount from the output signal of the indoor temperature sensor 75 and the indoor humidity sensor in specifying the wetting amount. The control means specifies the water amount of the dew condensation water from a value of the estimated saturated water vapor amount and duration time or elapsed time measured by a timer (not shown) built in the indoor unit 3. Generally, after the cooling operation, the temperature of the indoor heat exchanger 31 is low, and the dew condensation water is generated on the surface of the indoor heat exchanger 31.

In a case where the estimated wetting amount falls short of the predetermined specified amount, the control means cools the indoor heat exchanger 31 in ST139. The control means instructs operations of the expansion valve 24 and the compressor 21 to lower an evaporation temperature of the refrigerant in the indoor heat exchanger 31 in cooling the indoor heat exchanger 31. As a result, the temperature of the indoor heat exchanger 31 is reduced, and the generation of the dew condensation water is promoted. On the surface of the indoor heat exchanger 31, sufficient wetting is secured. A predetermined specified amount for the wetting amount may be set to a water amount in which effectiveness of wet-heat sterilization is not lost due to evaporation during heating of the indoor heat exchanger 31 in order to perform wet-heat sterilization that can kill bacteria at a temperature lower than a temperature in the drying state to reduce the number of bacteria by applying heat to bacteria and fungus in a high humidity state.

When the estimated wetting amount reaches the predetermined specified amount, the control means heats the indoor heat exchanger 31 in ST140. Condensation of the refrigerant is used to heat the indoor heat exchanger 31. At this time, the control means switches the four-way valve 22. The four-way valve 22 is switched to a position in the heating operation. Here, the temperature of the indoor heat exchanger 31 at the time of heating is set to 45 degrees Celsius or higher. Preferably, the temperature of the indoor heat exchanger 31 is set to 60 degrees Celsius or higher. Accordingly, the indoor heat exchanger 31 is heated without evaporating the dew condensation water on the surface of the indoor heat exchanger 31 without the drying operation performed in the related art. The dew condensation water is heated by the indoor heat exchanger 31. Bacteria and fungi are heated in the heated dew condensation water. Therefore, bacteria and fungi are wet heat sterilized. The number of bacteria and fungi can be reduced by killing bacteria and fungi.

In particular, when the temperature of the indoor heat exchanger 31 is set to 45 degrees Celsius or higher, the dew condensation water is heated to 45 degrees Celsius or higher, and the wet-heat sterilization of bacteria and fungus is effectively realized. Further, when the temperature of the indoor heat exchanger 31 is set to 60 degrees Celsius or higher, the wet-heat sterilization of bacteria and fungus is further effectively realized. The time to sterilization can be shortened. However, it is desirable that the temperature of the indoor heat exchanger 31 is set to 70 degrees Celsius or lower, a temperature as low as possible, in order to suppress evaporation of the dew condensation water as much as possible. In a state where the heat exchanger is dried, even if the temperature is set to 45 degrees Celsius or higher, it does not lead to the sterilization of bacteria and fungus.

The opening degree of the expansion valve 24 and the rotation of the fans 27 and 32 are appropriately adjusted such that the temperature of the indoor heat exchanger 31 does not exceed 60 degrees to become an overload condition when heating the indoor heat exchanger 31.

In ST141, the control means determines the completion of wet-heat sterilization. In the determination, for example, the control means uses the measurement of the timer. The timer measures the duration time of the set temperature. When the duration time of the set temperature reaches the specified value, the control means ends the wet-heat sterilization. When the duration time of the set temperature is lower than the specified value, the control means continues the heating operation. The specified value of the duration time of the set temperature may be equal to or longer than the time when the effect of wet-heat sterilization can be obtained. According to the experiments by an applicant, it is known that the effect of wet-heat sterilization can be obtained by setting the time to 3 minutes or longer for Escherichia coli and 5 minutes or longer for black fungus . In addition, it has been found that 10 minutes or longer is desirable for Legionella bacteria. At this time, the control means observes the operation of the compressor 21 in ST142. When the overload of the compressor 21 is detected in heating up to the set temperature, the control means lowers the discharge temperature of the compressor 21 in ST7, and the heating operation is ended. When the overload is not detected, the heating operation is continued until it is determined that wet-heat sterilization is completed in ST141.

Here, the overload condition of the compressor 21 set at the time of condensation is alleviated compared with the overload condition of the compressor 21 set in the heating operation. That is, the discharge temperature which is the threshold of the overload condition is set to be high, or the time until the overload protection operation is set to be long when the discharge temperature exceeds the threshold of the overload condition for a predetermined time. Since the overload condition of the compressor 21 is alleviated in the wet control operation, the indoor heat exchanger 31 can be heated to a higher temperature than that in the heating operation. The wet-heat sterilization of bacteria and fungus is realized.

In the wet control operation of the air conditioner 1, the drying process in the indoor unit 3 may be performed following the wet-heat sterilization process. In the drying process, the rotation of the indoor fan 32 is started in a state where the heating of the indoor heat exchanger 31 is maintained. The control means specifies the rotation speed of the indoor fan 32 when the indoor fan 32 rotates. The rotation of the indoor fan 32 promotes the evaporation of the heated dew condensation water. At this time, the blowing port of the indoor unit 3 may be closed by the vertical wind direction plate 35. When closing the blowing port, the control means may specify the minimum angle of the vertical wind direction plate 35. Blowing of a warm air after the cooling operation is avoided in this manner. The growth of bacteria and fungus remaining in the wet-heat sterilization is suppressed by continuing the dry heating following the process of the wet-heat sterilization.

## Claims

1. An air conditioner comprising:
an indoor heat exchanger;
an indoor unit having an indoor fan; and
control means for controlling the indoor fan,
wherein the control means causes the indoor heat exchanger to function as a condenser, and performs an indoor heat exchange heating operation for controlling the indoor fan such that an indoor heat exchange temperature, which is a temperature of the indoor heat exchanger, is maintained at a predetermined first temperature or higher at which the number of fungi or bacteria existing in the indoor heat exchanger is reduced.

2. The air conditioner according to claim 1,
wherein the control means performs the indoor heat exchange heating operation subsequently to a state in which the indoor heat exchanger functions as an evaporator.

3. The air conditioner according to claim 1 or 2,
wherein in the indoor heat exchange heating operation, the control means performs a temperature maintaining operation for controlling the indoor fan such that the indoor heat exchange temperature is a temperature between the first temperature and a predetermined second temperature which is higher than the first temperature.

4. The air conditioner according to any one of claims 1 to 3,
wherein, in addition to the temperature maintaining operation, the indoor heat exchange heating operation includes a temperature increasing operation which makes the indoor heat exchange temperature higher than a predetermined third temperature which is lower than the first temperature by controlling the indoor fan, and
the control means performs the temperature maintaining operation subsequently to the temperature increasing operation.

5. The air conditioner according to claim 4,
wherein even if the temperature increasing operation continues for a first predetermined time, the control means stops the indoor heat exchange heating operation in a case where the indoor heat exchange temperature is not higher than the third temperature.

6. The air conditioner according to claim 4,
wherein the control means continues the temperature maintaining operation for a second predetermined time.

7. The air conditioner according to any one of claims 1 to 6,
wherein the control means continues to drive the indoor fan at a rotation speed which is equal to or higher than a predetermined minimum rotation speed when the indoor heat exchange heating operation is performed.

8. The air conditioner according to any one of claims 1 to 7,
wherein the indoor unit includes a blowing port from which a conditioned air passing through the indoor heat exchanger is blown and a vertical wind direction plate which is rotatably arranged in a vertical direction in the blowing port and deflects the conditioned air blown from the blowing port in a vertical direction, and
the control means sets the vertical wind direction plate to a horizontal position when the indoor heat exchange heating operation is performed.

9. The air conditioner according to any one of claims 1 to 8, further comprising:
an outdoor unit which includes a compressor,
wherein the control means continues to drive the compressor at a predetermined minimum rotation speed when the indoor heat exchange heating operation is performed.

10. The air conditioner according to any one of claims 1 to 9,
wherein the indoor unit includes an indoor temperature sensor,
the outdoor unit includes an outdoor fan and an outside air temperature sensor,
when the temperature increasing operation is performed, the control means drives the outdoor fan at a rotation speed corresponding to a minimum rotation speed of the compressor,
when the temperature maintaining operation is performed, the control means
drives the outdoor fan at a rotation speed corresponding to a minimum rotation speed of the compressor in a case where an outside air temperature detected by the outside air temperature sensor is lower than a predetermined first threshold outside air temperature,
stops the outdoor fan in a case where the detected outside air temperature is equal to or higher than a predetermined second threshold outside air temperature which is a temperature higher than the first threshold outside air temperature, or in a case where the detected outside air temperature is equal to or higher than the first threshold outside air temperature and lower than the second threshold outside air temperature and an indoor temperature detected by the indoor temperature sensor is equal to or higher than a predetermined threshold indoor temperature, and
drives the outdoor fan at a predetermined outdoor fan rotation speed when maintaining a temperature in a case where the detected outside air temperature is equal to or higher than the first threshold outside air temperature and lower than the second threshold outside air temperature and the indoor temperature detected by the indoor temperature sensor is lower than a predetermined threshold indoor temperature.

11. The air conditioner according to claim 10,
wherein when the temperature maintaining operation is performed, the control means does not increase the rotation speed of the outdoor fan regardless of the outside air temperature and the indoor temperature in a case where the rotation speed of the outdoor fan is set to a rotation speed lower than the outdoor fan rotation speed when maintaining a temperature.

12. The air conditioner according to claim 2,
wherein the control means performs a wet control operation for controlling the indoor heat exchange temperature so as to wet a surface of the indoor heat exchanger with a specific water amount of dew condensation water.

13. The air conditioner according to any one of claims 1 to 12,
wherein the control means heats the indoor heat exchanger without evaporating dew condensation water on a surface of the indoor heat exchanger in the indoor heat exchange heating operation.
